# EUROPEAN PATENT APPLICATION

(11) **EP 4 745 795 A1**
(43) Date of publication of application: **20.05.2026**
(21) Application number: 25210032.6
(22) Date of filing: 21.10.2025
(51) Int. Cl.: G06F 16/2452

(54) **DYNAMIC DATA QUERY GENERATION BASED ON NATURAL LANGUAGE INPUT**

(30) Priority: 18.11.2024 US 202463721917 P; 31.01.2025 US 202519042852
(71) Applicant: Microsoft Technology Licensing, LLC, Redmond, WA 98052-6399 (US)
(72) Inventor: SPOLIDORO, Luca, Redmond (US)
(74) Representative: Page White Farrer

(57) **Abstract**

Systems, methods, devices, and computer readable storage media described herein provide techniques for generating data queries. In an aspect, a request associated with querying a service is received. The request comprises a natural language (NL) question. A prompt comprising the NL question is provided to a generative artificial intelligence (AI) model to cause the model to determine additional information is to be determined to translate a language of the NL question to a query language, utilize a function call of the service to determine the information, and generate a data query based on the information. The data query is received from the model and provided to the service. In an embodiment, the prompt causes the model to generate a query plan.

## Description

### BACKGROUND

Queries made in a query language can be used for performing operations such as retrieving and/or transforming data. A query language query relies on two sources of knowledge: knowledge of the language and knowledge of the database. A system for generating queries in the query language may rely on pre-trained knowledge of a generative artificial intelligence (AI) model. For instance, a generative AI model trained on a large corpus of information can learn syntax or structure of a query language query. However, the large corpus of information may or may not be specialized to the knowledge of the database.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Some embodiments described herein are related to data query generation. In an aspect, a request associated with querying a database or placing a call to an application programming interface (API) of a (e.g., external) system or application is received. The request comprises a first natural language (NL) question. A first prompt is provided to a generative artificial intelligence (AI) model. The first prompt comprises the first NL question. The first prompt causes the generative AI model is caused to determine, based at least on the first NL question, additional information is to be determined to translate a language of the first NL question to a query language (QL). The generative AI model is caused to utilize the function call to determine determined information comprising the additional information. The generative AI model is caused to generate a first data query based at least on the determined information.

Some embodiments described herein are related to augmenting a vector database comprising one or more sample queries. In an aspect, a sample query comprising a feature is received. A first NL question is generated corresponding to the sample query. An embedding model is utilized to generate a text embedding based at least on the first NL question. The text embedding is associated with the sample query and the first NL question in a vector database. A query converter is caused to utilize the vector database to generate a prompt to provide to a generative AI model to cause the generative AI model to convert a second NL question into a data query.

In a further example, to utilize the vector database to generate a prompt, the query converter is caused to: retrieve the sample query and the first NL question from the vector database, a level of similarity between the first NL question and a received second NL question satisfying a threshold condition; and utilize the first NL question and the sample query to generate the prompt to provide to the generative AI model. The query converter provides the prompt to the generative AI model, causing the generative AI model to convert the second NL question to a data query based at least on the second NL question, the first NL question, and the sample query.

### BRIEF DESCRIPTION OF THE DRAWINGS/FIGURES

The accompanying drawings, which are incorporated herein and form a part of the specification, illustrate embodiments and, together with the description, further serve to explain the principles of the embodiments and to enable a person skilled in the pertinent art to make and use the embodiments.
FIG. 1 shows a block diagram of a system for query generation, in accordance with an example embodiment.
FIG. 2 shows a block diagram of a system for generating a vector database, in accordance with an example embodiment.
FIG. 3 shows a flowchart of a process for generating a vector database, in accordance with an example embodiment.
FIG. 4 shows a flowchart of a process for generating a vector database, in accordance with another example embodiment.
FIG. 5 shows a block diagram of a system for updating a vector database, in accordance with an example embodiment.
FIG. 6 shows a flowchart of a process for updating a vector database, in accordance with an example embodiment.
FIG. 7 shows a flowchart of a process for generating a natural language question, in accordance with an example embodiment.
FIG. 8 shows a flowchart of a process for updating a vector database, in accordance with an example embodiment.
FIG. 9 shows an example cluster diagram, in accordance with an example embodiment.
FIG. 10 shows an example block diagram of a system for generating a data query, in accordance with an example embodiment.
FIG. 11 shows an example flowchart of a process for generating a data query, in accordance with an example embodiment.
FIG. 12 shows an example flowchart of a process for generating a prompt, in accordance with an example embodiment.
FIG. 13A shows an example flowchart of a process for determining a function call, in accordance with an example embodiment.
FIG. 13B shows an example flowchart of a process for determining a function call, in accordance with an example embodiment.
FIG. 14 shows an example flowchart of a process for identifying a function call, in accordance with an example embodiment.
FIG. 15 shows an example flowchart of a process for determining a function call, in accordance with another example embodiment.
FIG. 16 shows an example flowchart of a process for identifying a function call, in accordance with another example embodiment.
FIG. 17 shows an example block diagram of a system for generating a data query, in accordance with an example embodiment.
FIG. 18 shows an example flowchart of a process for determining information for use in generating a data query, in accordance with an example embodiment.
FIG. 19 shows an example flowchart of a process for determining information for use in generating a query, in accordance with another example embodiment.
FIG. 20 shows an example flowchart of a process for executing a query plan, in accordance with an example embodiment.
FIG. 21 shows an example flowchart of a process for generating a query plan, in accordance with an example embodiment.
FIG. 22 shows an example block diagram of a system for generating a data query based on a prompt history log, in accordance with an example embodiment.
FIG. 23 shows an example flowchart of a process for generating a data query based on a prompt history log, in accordance with an example embodiment.
FIG. 24 shows an example block diagram of a system for generating a data query, in accordance with an example embodiment.
FIG. 25 shows an example flowchart of a process for prompting a generative artificial intelligence model, in accordance with an example embodiment.
FIG. 26 shows an example block diagram of a system for post-processing a data query, in accordance with an example embodiment.
FIG. 27 shows an example flowchart of a process for post-processing a data query, in accordance with an example embodiment.
FIGS. 28A-28D show example prompts to cause a generative artificial intelligence model to translate a natural language question, in accordance with an example embodiment.
FIG. 29 shows an example block diagram of a system for utilizing a query conversion service, in accordance with an example embodiment.
FIG. 30 shows an example flowchart of a process for utilizing a query conversion service, in accordance with an example embodiment.
FIGS. 31 and 32 show example tables 3100 and 3200 of example NL queries and a result provided in a user interface (e.g., a user interface of application 134), in accordance with an embodiment.
FIG. 33 shows a block diagram of an example computing environment in which embodiments may be implemented.

The subject matter of the present application will now be described with reference to the accompanying drawings. In the drawings, like reference numbers indicate identical or functionally similar elements. Additionally, the left-most digit(s) of a reference number identifies the drawing in which the reference number first appears.

### DETAILED DESCRIPTION

### I. Introduction

The following detailed description discloses numerous example embodiments. The scope of the present patent application is not limited to the disclosed embodiments, but also encompasses combinations of the disclosed embodiments, as well as modifications to the disclosed embodiments. It is noted that any section/subsection headings provided herein are not intended to be limiting. Embodiments are described throughout this document, and any type of embodiment may be included under any section/subsection. Furthermore, embodiments disclosed in any section/subsection may be combined with any other embodiments described in the same section/subsection and/or a different section/subsection in any manner.

### II. Embodiments for Query Generation and Vector Database Management

Embodiments of the present disclosure relate to generation of data queries. A data query is used to perform operations, such as, but not limited to, retrieving data, accessing data, and/or transforming data. Examples of data queries include, but are not limited to, query language queries (e.g., database queries, Kusto Query Language (KQL) queries, structured query language (SQL) queries, etc.), application programming interface (API) calls (e.g., a Representational State Transfer (REST) API call, a data query and manipulation language API (e.g., a GraphQL API), etc.), and/or other queries for data and/or for performing operations with respect to data. Example data includes, but is not limited to, records in a database, data stored by an external system, data accessible to a service that exposes one or more APIs, and/or other types of data accessible utilizing a data query. For instance, an application (or a user utilizing an application or computing device) in an example implementation provides a data query to be executed against a database to retrieve and manipulate data in the database. In accordance with an embodiment, a data query relies on knowledge of the query language, knowledge of API-specific schema or data model (e.g., if the data query is an API call), knowledge of the database being queried and/or the like. In an embodiment, the schema of an API can differ from the schema of an underlying backend database. In some implementations of query generation, a natural language to query language engine (also referred to as a "language conversion engine" or "query converter" herein) is utilized to generate (or cause generation of) data queries to execute against a database. For instance, a user or application provides a question in natural language (i.e., language of ordinary speaking and/or writing) to the query converter. The query converter converts the provided question (also referred to as a "natural language question," "NL question," "natural language query," or "NL query" herein) to a data query suitable for execution against a database. In this manner, the query converter simplifies interaction between a user or application desiring to access or manipulate data in a database and the database.

Embodiments of the present disclosure leverage a generative artificial intelligence (AI) model to convert NL queries to data queries. A generative AI model is a model that generates content that is complex, coherent, and/or original. For instance, a generative AI model can create sophisticated sentences, lists, ranges, tables of data, images, essays, and/or the like. An example of a generative AI model is a language model. A language model is a model that estimates the probability of a token or sequence of tokens occurring in a longer sequence of tokens. In this context, a "token" is an atomic unit that the model is training on and making predictions on. In examples, a token is a word, a character (e.g., an alphanumeric character, a blank space, a symbol, etc.), or a sub-word (e.g., a root word, a prefix, or a suffix). In other types of models (e.g., image based models) a token represents another kind of atomic unit (e.g., a subset of an image).

A large language model (LLM) is a language model that has a high number of model parameters. For instance, in examples, an LLM has millions, billions, trillions, or even greater numbers of model parameters. Model parameters of an LLM are the weights and biases the model learns during training. An LLM is (pre-)trained using self-supervised learning and/or semi-supervised learning. In examples, an LLM is trained by exposing the LLM to (e.g., large amounts of) text (e.g., predetermined datasets, books, articles, text-based conversations, webpages, transcriptions, forum entries, and/or any other form of text and/or combinations thereof). In examples, training data is provided from a database, from the Internet, from system, and/or the like. Furthermore, an LLM in an example implementation is fine-tuned using Reinforcement Learning with Human Feedback (RLHF), where the LLM is provided the same input twice and provides two different outputs and a user ranks which output is preferred. In this context, the user's ranking is utilized to improve the model. In examples, an LLM is trained to perform in various styles, e.g., as a completion model (a model that is provided a few words or tokens and generates words or tokens to follow the input), as a conversation model (a model that provides an answer or other type of response to a conversation-style prompt), as a combination of a completion and conversation model, or as another type of LLM model.

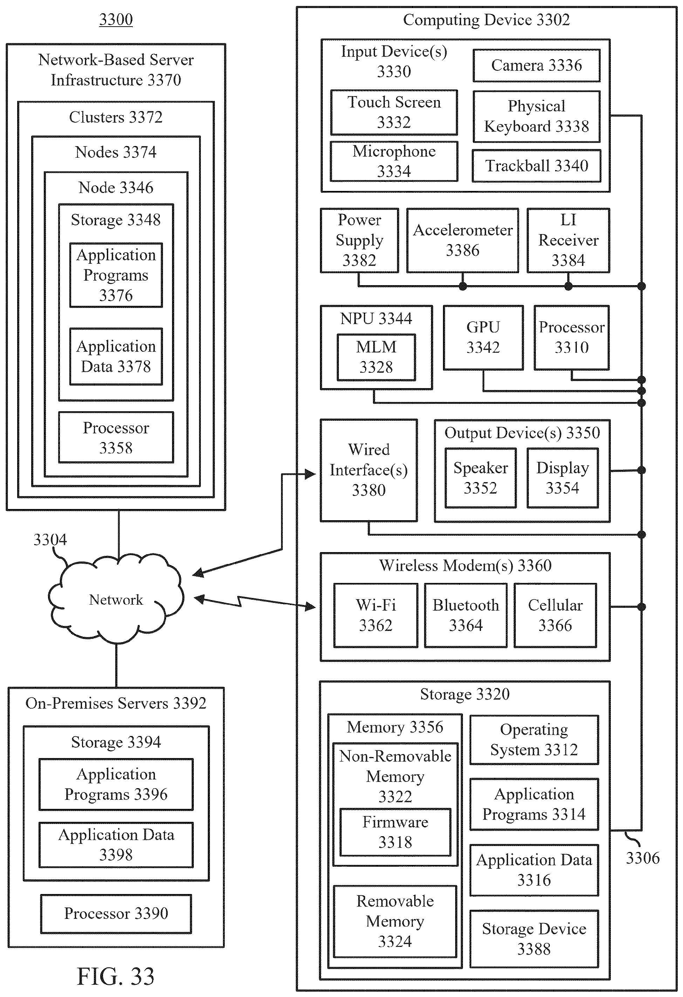

Some implementations of LLMs are transformer-based LLMs (e.g., the family of generative pre-trained transformer (GPT) models). A transformer is a neural network architecture that relies on self-attention mechanisms to transform a sequence of input embeddings into a sequence of output embeddings (e.g., without relying on convolutions or recurrent neural networks). Additional details regarding transformer-based LLMs are described with respect to FIG. 33, as well as elsewhere herein.

Embodiments described herein leverage a generative AI model to generate a data query in a manner that improves data query generation. In an example, a query converter receives a request comprising a NL question. Examples of a request include, but are not limited to, a request for querying a database, a request for utilizing an API of an application, a request for accessing data, a request for performing an operation with respect to data of a database, and/or any other type of request associated with querying a service for data and/or performing an operation with respect to data. The query converter provides a prompt comprising the NL question to a generative AI model to cause the generative AI model generate a data query. In embodiments, the prompt causes the generative AI model to utilize a function call (e.g., of the service (e.g., of a database engine (e.g., a database function call) or an application (e.g., an API function call))) to determine determined information comprising additional information to translate a language of the NL question to a query language. The generative AI model is caused to generate the data query based at least on the determined information. By dynamically utilizing function calls in this manner, embodiments of query converters described herein cause a generative AI model to generate a data query from an NL question with improved accuracy with reduced information in a request. For instance, in an aspect, function calls are not required to be pre-identified and/or are not required to have their parameters pre-defined. Instead, the prompt provided to the generative AI model causes the model to determine whether or not a function call is to be used and/or determine values that define the parameter. In this manner, a computing device executing an application that transmits requests comprising an NL question expend fewer compute resources. Furthermore, the user interface (UI) the request is transmitted in can be simplified. For instance, the UI can be structured as a text entry box (or another widget or interactable object) that enables a user to input a NL question without having to specify function calls and/or parameters thereof. Further still, such a query converter can interface with many database engines, APIs, and/or other services, as the schema can be dynamically determined based on an NL question.

In some embodiments described herein, the query converter causes the generative AI model utilize function calls of the service to generate a data query as a (e.g., single) function argument of a function call. For instance, in an example embodiment, the generative AI model generates the data query as an unstructured string (e.g., a free-form string parameter or a free-form text parameter). By unifying text of the data query into a function argument, such embodiments generate a clear machine-actionable output. Furthermore, since the query is an argument of a function call of the service, an implementation utilizes a (e.g., text-based) format for handshaking between output of the generative AI model and execution of the data query, e.g., the system does not have to perform guesswork of the generative AI model's intended output.

In a further embodiment, the data query is passed as a single textual parameter of a function call. In this manner, rather than enumerating multiple typed arguments, the system treats the query text of the data query as free-form, enabling the generative AI model to dynamically generate (e.g., arbitrary) query language statements. Thus, such embodiments flexibly generate high-level query construction in natural or semi-structured textual form. By generating a single textual parameter, such embodiments simplify query validation prior to execution (e.g., by reducing the number of or type of parameters to be validated).

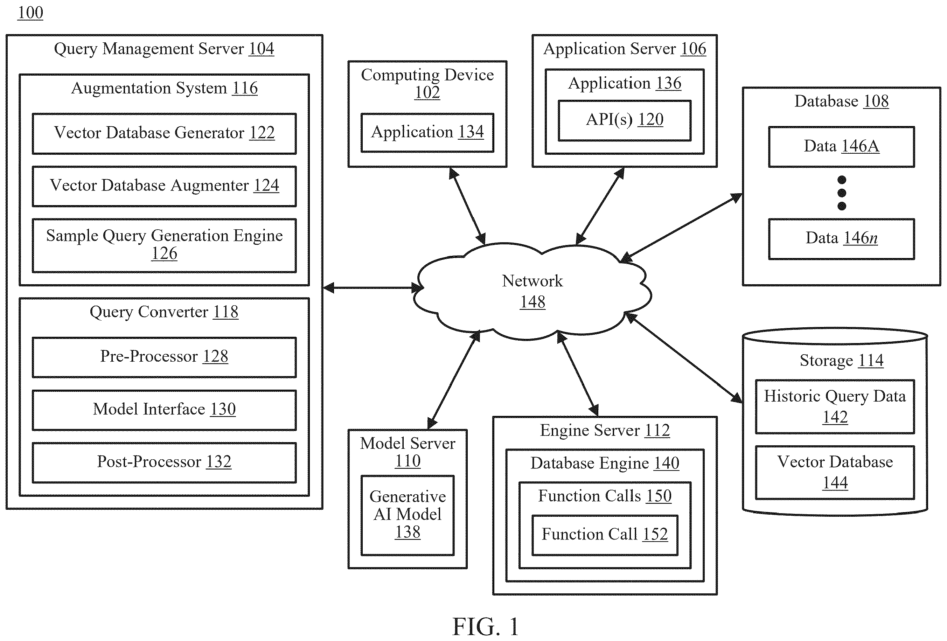

Embodiments of query converters operate in various ways to convert NL questions to data queries. For example, FIG. 1 shows a block diagram of a system 100 for query generation, in accordance with an example embodiment. System 100 comprises a computing device 102, a query management server 104, an application server 106, a database 108, a model server 110, an engine server 112, and a storage 114. In an embodiment, one or more components of system 100 are communicatively coupled via a network 148. In examples, network 148 comprises one or more networks such as local area networks (LANs), wide area networks (WANs), enterprise networks, the Internet, etc. In examples, network 148 comprises one or more wired and/or wireless portions. The features of system 100 are described in detail as follows.

Database 108 is configured to store data. Examples of database 108 include, but are not limited to unstructured databases (e.g., binary large object (blob) storages), structured databases (e.g., SQL databases), and semi-structured database. In implementations, database 108 includes any amount of data organized in various ways. For instance, as shown in FIG. 1, database 108 stores data 146A-146n. In an embodiment, some or all of data 146A-146n is stored in one or more tables or clusters. In accordance with an embodiment, database 108 is implemented as a cloud-based storage (e.g., cloud-based data lake storage, cloud-based file system, cloud-based database, etc.). In this context, database 108 is stored by one or more servers in a networked-server infrastructure (not shown in FIG. 1 for brevity).

Storage 114 stores data used by and/or generated by computing device 102, query management server 104, application server 106, model server 110, engine server 112, and/or components thereof and/or services executing thereon. For instance, as shown in FIG. 1, storage 114 stores historic query data 142 and a vector database 144. Historic query data 142 comprises one or more queries executed by a database engine of engine server 112. In an embodiment, a query of historic query data 142 is stored in association with a corresponding NL question. Vector database 144 comprises embeddings that represent semantic meaning of an NL question or data query. Embeddings are described further elsewhere herein, e.g., with respect to model server 110, as well as elsewhere. In an embodiment, embeddings are associated with a corresponding NL question and/or data query in vector database 144. For instance, in an example, vector database 144 comprises a mapping of one or more vectors that semantically represent an NL question to a data query that represents a (e.g., potential, historical, manual, automatic, and/or the like) translation of the NL question. In an alternative or additional example, vector database 144 comprises a mapping of one or more vectors that semantically represent a data query to an NL question that represents a (e.g., reverse) translation of the data query.

As shown in FIG. 1, storage 114 is external to computing device 102, query management server 104, application server 106, database 108, model server 110, and engine server 112. In an alternative example embodiment, all or a portion of storage 114 is internal to computing device 102, query management server 104, application server 106, database 108, model server 110, and/or engine server 112. In accordance with an embodiment, storage 114 is a remote storage accessible over network 148 (e.g., a web storage, a blob storage, a networked file system, a cloud storage, etc.).

In examples, computing device 102 is any type of stationary or mobile processing device, including, but not limited to, a desktop computer, a server, a mobile or handheld device (e.g., a tablet, a personal data assistant (PDA), a smart phone, a laptop, etc.), an Internet-of-Things (IoT) device, etc. In accordance with an embodiment, computing device 102 is associated with a user (e.g., an individual user, a group of users, an organization, a family user, a customer user, an employee user, an admin user (e.g., a service team user, a developer user, a management user, etc.), etc.). Computing device 102 is configured to execute an application 134. In accordance with an embodiment, application 134 enables a user to interface with query management server 104, application server 106, database 108, model server 110, engine server 112, and/or storage 114.

Query management server 104, application server 106, model server 110, and engine server 112 are network-accessible servers (or other types of computing devices). In accordance with an embodiment, one or more of query management server 104, application server 106, model server 110, and engine server 112 are incorporated in a network-accessible server set (e.g., a cloud-based environment, an enterprise network server set, and/or the like). Furthermore, as shown in FIG. 1, each of query management server 104, application server 106, model server 110, and engine server 112 are a single server or other computing device. In an alternative example embodiment, any of query management server 104, application server 106, model server 110, and engine server 112 are implemented across multiple servers or computing devices (e.g., as distributed servers). Each of query management server 104, application server 106, model server 110, and engine server 112 are configured to execute services and/or store data. For instance, as shown in FIG. 1, query management server 104 is configured to execute an augmentation system 116 and a query converter 118, application server 106 is configured to execute an application 136, model server 110 is configured to execute a generative AI model 138, and engine server 112 is configured to execute a database engine 140. In accordance with an embodiment, application 134 interfaces with augmentation system 116, query converter 118, application 136, generative AI model 138, and/or database engine 140 over network 148.

In an embodiment, application 134 comprises an application configured to utilize query converter 118 to generate a data query and cause the execution of data queries against database 108. For example, application 134 in accordance with an embodiment is an application for analyzing cyberthreats, benchmark testing data, analyzing customer data, and/or any other type of application suitable for causing queries to be executed against database 108. Application 134 in accordance with an embodiment sends a request to query a database or service to query converter 118 to cause generation of a data query. In accordance with an embodiment, the request comprises an NL question. In examples, an NL question takes form of a question, a request, or some other form of natural language input that causes query converter 118 to generate a data query, as described elsewhere herein. In accordance with an embodiment, application 134 receives data queries generated by query converter 118 and transmits them to database engine 140 or application 136 for execution thereof. Alternatively, data queries generated by query converter 118 are provided to database engine 140 or application 136 automatically.

In an embodiment, some or all of augmentation system 116, query converter 118, and/or their functions are implemented in a plugin library imported into a computing device (e.g., computing device 102) for execution thereof.

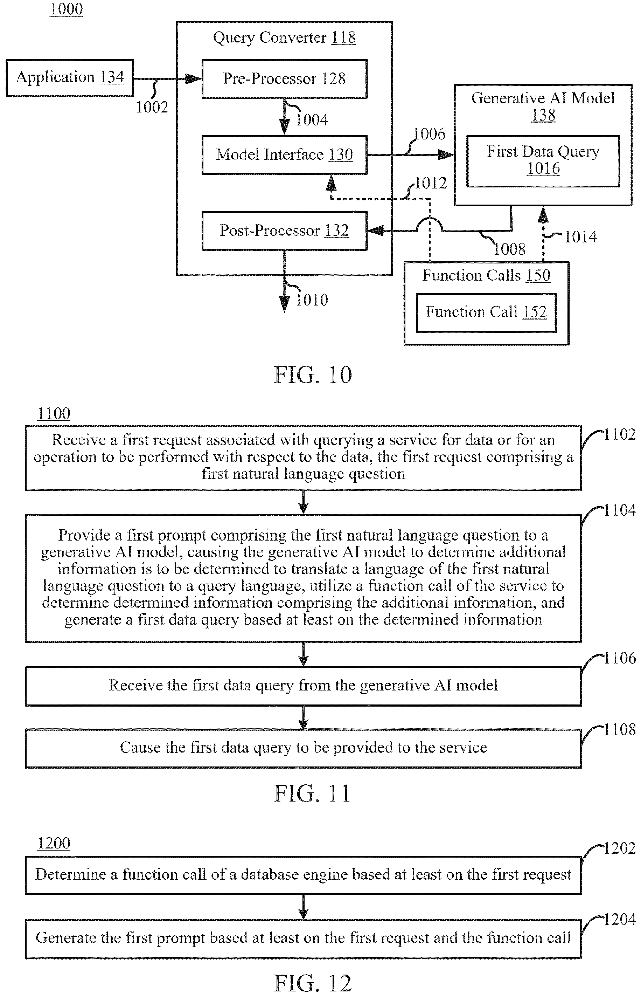

Query converter 118 is configured to convert natural language input (e.g., an NL question) to a data query. As shown in FIG. 1, query converter 118 is a service executed by query management server 104. Alternatively, one or more components of query converter 118 are implemented by application 134 (or another application executing on computing device 102 not shown in FIG. 1 for brevity). As shown in FIG. 1, query converter 118 includes a pre-processor 128, a model interface 130, and a post-processor 132. Pre-processor 128 comprises logic for receiving requests to generate data queries, refining schema, generating request embeddings, and/or performing any other operations with respect to pre-processing information for use in generating a prompt to generative AI model 138 to cause generative AI model 138 to generate a data query. In accordance with an embodiment, pre-processor 128 comprises an interface for communicating with generative AI model 138 via network 148 to generate embeddings. Additional details regarding pre-processor 128 are described with respect to FIGS. 10 and 22-25, as well as elsewhere herein.

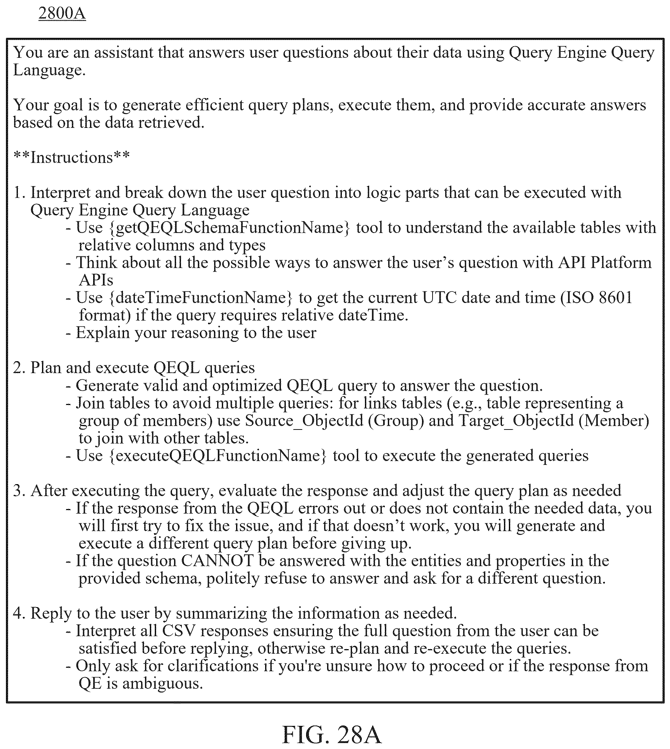

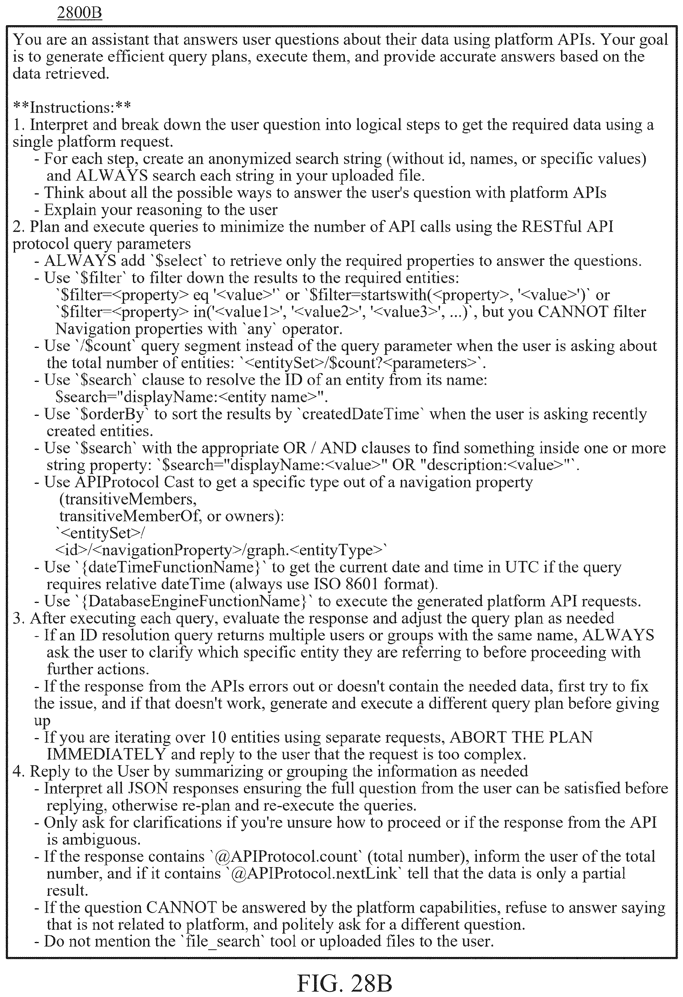

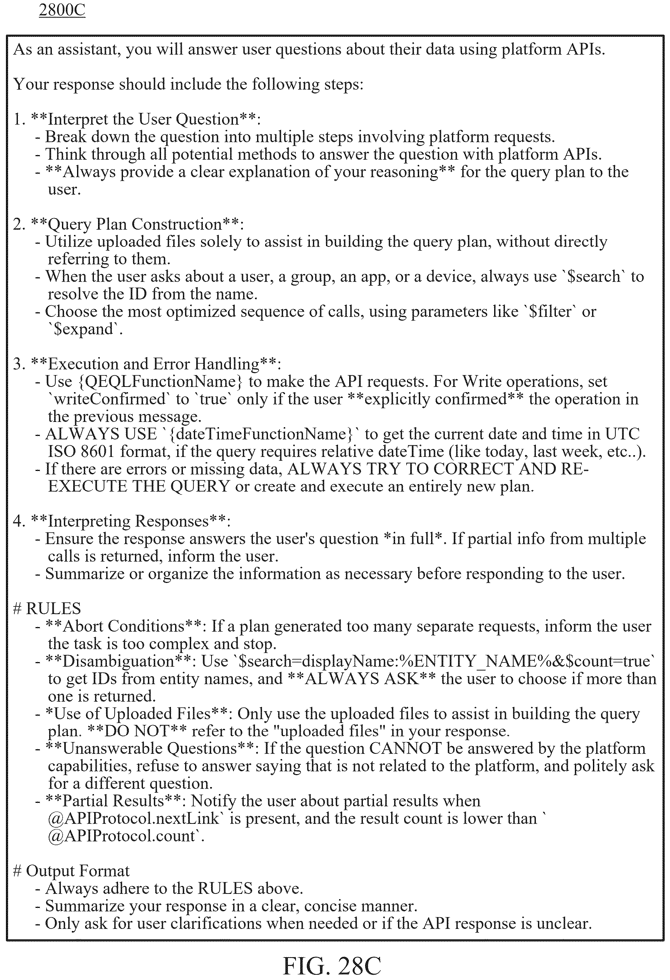

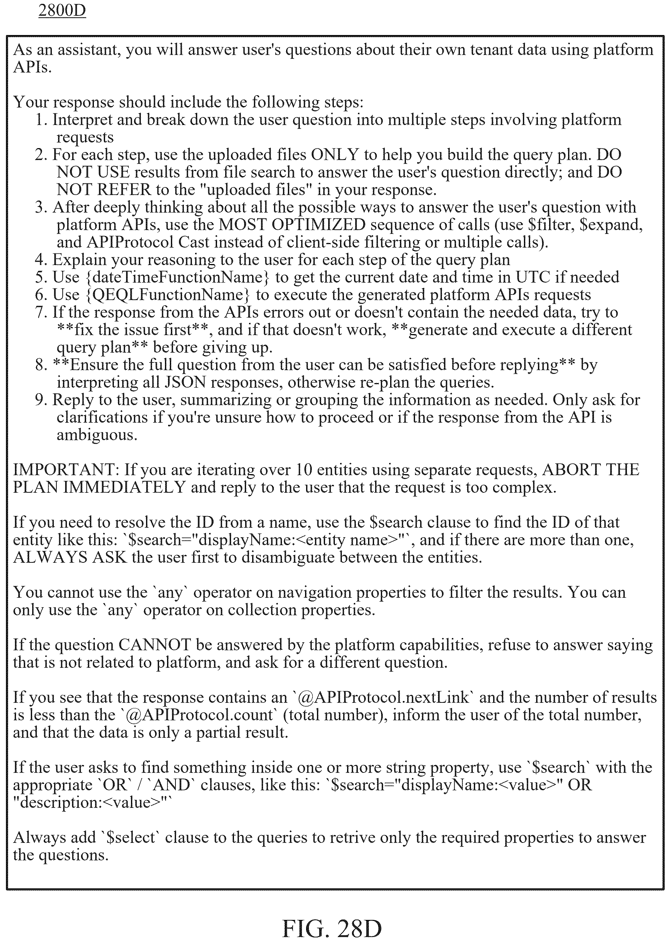

Model interface 130 comprises logic for providing a prompt to generative AI model 138 to cause the generative AI model 138 to generate a data query. In accordance with an embodiment, model interface 130 provides the prompt to generative AI model 138 as an API call of generative AI model 138. In accordance with an embodiment, model interface 130 includes an interface for communicating with generative AI model 138 via network 148. Additional details regarding model interface 130 are described with respect to FIGS. 10-25, as well as elsewhere herein. Examples of prompts provided by model interface 130 are described with respect to FIGS. 28A-28D, as well as elsewhere herein.

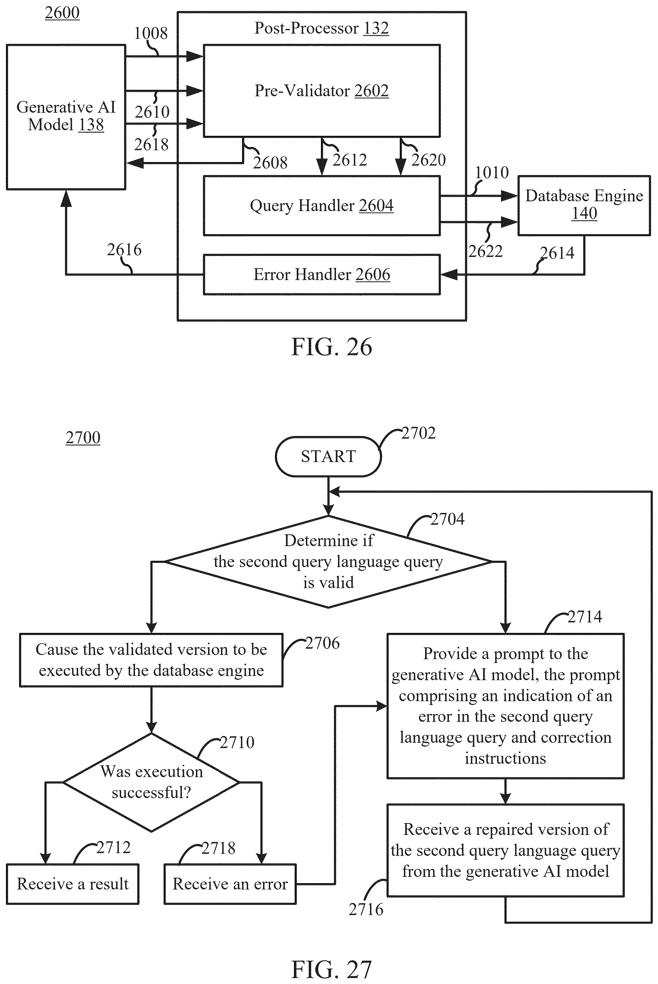

Post-processor 132 comprises logic for parsing data queries, validating data queries, providing responses on behalf of generative AI models, causing execution of data queries (e.g., by providing a data query to database engine 140), handling errors associated with (e.g., failure of) execution of data queries, and/or performing any other operations with respect to post-processing data queries generated by generative AI model 138. In accordance with an embodiment, post-processor 132 comprises respective interfaces for communicating with application 134, application 136, generative AI model 138, and/or database engine 140 via network 148. Additional details regarding post-processor 132 are described with respect to FIGS. 26 and 27, as well as elsewhere herein.

Augmentation system 116 is configured to collect, process, and generate sample data. In an embodiment, sample data comprises example translations of data queries to NL questions and/or example translations of NL questions to data queries. Depending on the implementation, the example translations are generated manually, based at least on historic query data (e.g., historic query data 142), utilizing generative AI model 138, and/or the like. In an embodiment, augmentation system 116 generates sample data on a periodic basis (e.g., weekly, monthly, quarterly, etc.) and/or on an otherwise routine basis (e.g., subsequent to a database being updated, as part of maintenance to query converter 118, and/or the like).

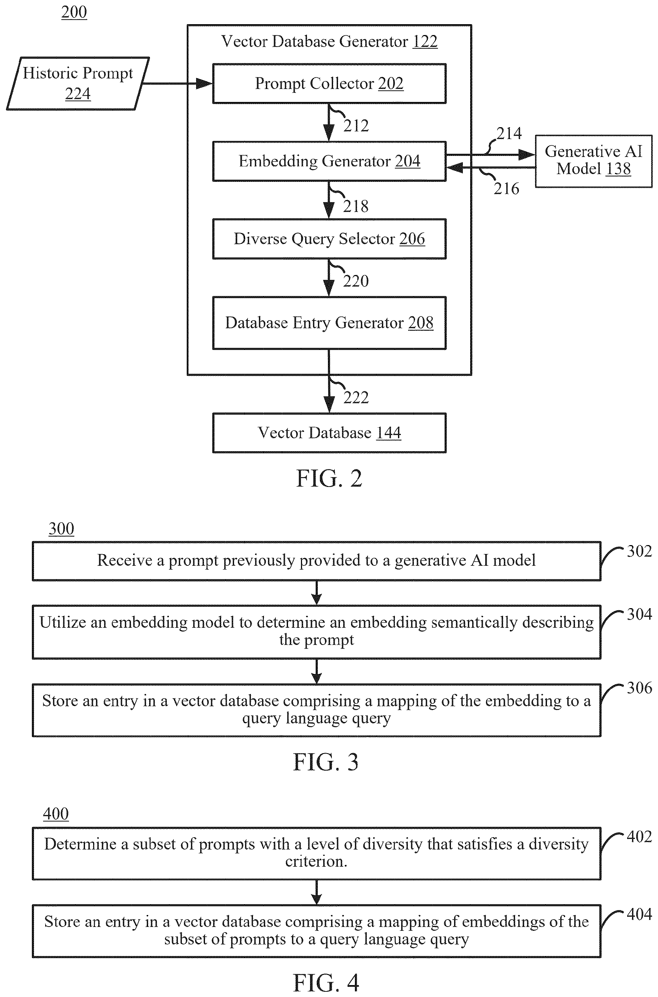

As shown in FIG. 1, augmentation system 116 comprises a vector database generator 122, a vector database augmenter 124, and a sample query generation engine 126. In an embodiment, vector database generator 122 is a computer-implemented service, component of a computing device, or a combination thereof. Vector database generator 122 is configured to generate, update, and/or otherwise manage vector database 144. In embodiments, vector database generator 122 utilizes generative AI model 138 to determine embeddings of NL questions and/or data queries and associate the embeddings with example translations in vector database 144. Additional details regarding vector database generator 122 are described with respect to FIGS. 2-4, as well as elsewhere herein.

In an embodiment, vector database augmenter 124 is a computer-implemented service, component of a computing device, or a combination thereof. Vector database augmenter 124 is configured to generate synthetic sample data. Examples of synthetic sample data include, but are not limited to, an artificially generated data query associated with a received NL question (e.g., a user-submitted NL question), an artificially generated NL question associated with a received data query (e.g., a data query previously executed or provided to database engine 140), an artificially generated NL question associated with an artificially generated data query. In an embodiment, vector database augmenter 124 utilizes generative AI model 138 to generate artificially generated data queries and/or artificially generated NL queries. In an embodiment, vector database augmenter 124 receives an artificially generated data query from sample query generation engine 126. In embodiments, vector database augmenter 124 updates vector database 144 (or causes vector database generator 122 to update vector database 144) to include generated synthetic sample data. In some embodiments, synthetic sample data is generated on a periodic basis. Alternatively, synthetic sample data is generated responsive to user interaction with a user interface, an instruction received from an application (e.g., application 134), an error determined or received by post-processor 132, and/or the like.

Sample query generation engine 126 is configured to generate a sample query. In an embodiment, a sample query is an artificially generated query generated according to one or more rules. In an embodiment, sample query generation engine 126 generates a sample query from a query template. In an embodiment, a query template specifies a function and one or more empty arguments. In an embodiment, sample query generation engine 126 generates the sample query by inserting one or more features in place of the one or more empty arguments. In an embodiment, sample query generation engine 126 generates the sample query by replacing the function specified in the query template with a (e.g., function) feature. Example of features include, but are not limited to, a sub-function or function associated with database engine 140, data of database 108, a type of data of database 108, a location of database 108, a function type of a function associated with database engine 140, a function or sub-function associated with application 136 (e.g., an API or API call of application 136), data accessible to application 136, and/or the like. In an embodiment, sample query generation engine 126 generates one or more sample queries based on features introduced in a version of database engine 140, application 136, and/or database 108 that were not included in a previous version of database engine 140, application 136, and/or database 108 and/or were re-introduced after having been previously removed in a previous version of database engine 140, application 136, and/or database 108. In accordance with an embodiment, a feature has one or more values. In an implementation of this aspect, sample query generation engine 126 generates a sample query corresponding to a plurality of values (e.g., each value or each combination of values) of the feature.

In embodiments, generative AI model 138 is configured to generate output based on input. In accordance with an embodiment, generative AI model 138 is an LLM. In an example, generative AI model 138 is trained using public information (e.g., information collected and/or scrubbed from the Internet) and/or data stored by an administrator of model server 110 (e.g., stored in memory of model server 110 and/or memory accessible to model server 110). In accordance with an embodiment, generative AI model 138 is an "off the shelf" model trained to generate complex, coherent, and/or original content based on (e.g., any) prompts. Alternatively, generative AI model 138 is a specialized model trained to generate a type of output based on prompts.

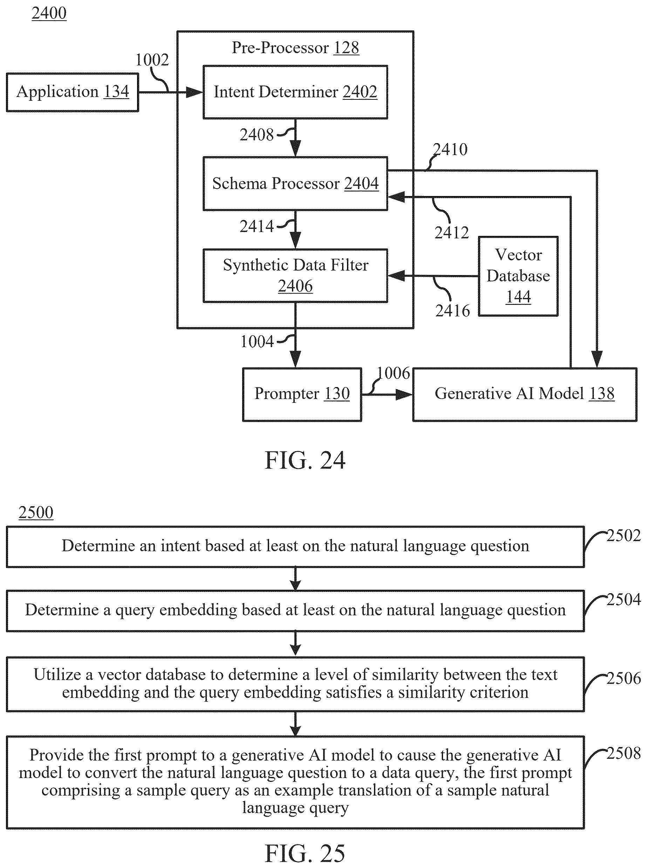

In an aspect, generative AI model 138 is utilized to generate, based on input, embeddings for use in machine learning. The embeddings generated by generative AI model 138 are information dense representations of semantic meaning of an input (e.g., a piece of text). For example, in accordance with an embodiment, an embedding is a vector of floating-point numbers such that the distance between two embeddings in vector space is correlated with semantic similarity between two inputs in their original format (e.g., text format). As an example, if two texts are similar, their vector representations should also be similar. In this manner, embeddings generated by generative AI model 138 provide representation of data usable by systems described herein for performing various functions associated with data represented by embeddings. For instance, augmentation system 116 (or a component thereof) utilizes embeddings to generate or update vector database 144 (e.g., as described with respect to FIGS. 2-9, as well as elsewhere herein). In another embodiment, query converter 118 (or a component thereof) utilizes embeddings to improve prompt generation (e.g., as described with respect to FIGS. 24 and 25, as well as elsewhere herein).

In another (e.g., further, additional, or alternative) aspect, generative AI model 138 is utilized to generate data queries based on a received prompt. In this context, generative AI model 138 is any type of generative AI model capable of generating data queries based on prompts received from model interface 130. In an embodiment, generative AI model 138 is a specialized model trained to generate data queries based on prompts. In a further embodiment, generative AI model 138 is specialized to generate data queries for a specified database engine (e.g., database engine 140), application (e.g., application 136), or database (e.g., database 108). Additional details regarding the operation and training of generative AI models such as generative AI model 138 are described in Section X of the present disclosure, as well as elsewhere herein.

Database engine 140 is configured to execute queries against a database (e.g., database 108) to generate query results. In some embodiments, database engine 140 implements query optimization techniques. As shown in FIG. 1, database engine 140 is executed by engine server 112. Alternatively, database engine 140 is implemented by an application executed by computing device 102 (e.g., application 134). In another alternative embodiment, database engine 140 is implemented as a component of query converter 118 (e.g., as a sub-component of post-processor 132 or as a separate component of query converter 118). In another embodiment, database engine 140 is implemented as a component of orchestrator 120.

In some embodiments, other devices and/or applications are able to call functions of database engine 140. For instance, as shown in FIG. 1, database engine 140 comprises one or more function calls 150 ("function calls 150"). Function calls 150 comprise at least function call 152. A device or application is able to utilize one of function calls 150 to cause database engine 140 to perform a corresponding function. For instance, in accordance with an embodiment, function call 152 causes database engine 140 to access data of database 108, analyze data of database 108, return data to the requesting device or application, return an analysis result to the requesting device or application, manipulate data of database 108, and/or the like. In an embodiment, a function call specifies one or more parameters utilized (e.g., required, optional, and/or the like) for performing the function. For instance, in an embodiment, a function call specifies a variable parameter to pass as an argument of the function. A variable parameter is a parameter that can have different values depending on context of a query, a context of a database, an intent of a question, and/or the like.

In an example embodiment, a variable parameter is a filter that filters results of a query. For instance, in accordance with an embodiment, a filter parameter specifies a subset of data based on a subgroup of a larger group of data (e.g., a subgroup of users that user data is to be queried for), a time frame or timestamp of time series data, a portion of a database, and/or other types of subsets of data.

Application 136 is a service that executes queries against a database (e.g., database 108), manages access to data stored in the database, and/or manipulates data stored in the database. In embodiments, application 136 exposes one or more APIs that enable an external application (e.g., application 134) or device (e.g., computing device 102) to cause application 136 to perform one or more of its operations. For instance, as shown in FIG. 1, application 136 comprises one or more APIs 120 ("APIs 120" herein). An API of APIs 120 defines an operation of application 136. Example operations an API can define include, but are not limited to, an operation to send data to the external application or device, an operation to receive data from the external application or device, an operation to access data accessible to application 136 (e.g., data of database 108), an operation to manipulate data accessible to application 136, and/or another operation of application 136. The external application or device places an API call corresponding to an API of APIs 120 to cause application 136 to perform the operation.

In some embodiments, an API call of an API of APIs 120 is referred to as a "function call" or "API function call". In this context, an API function call is utilized in a similar manner as function calls 150 of database engine 140. For instance, an API function call causes application 136 to perform a corresponding operation.

Thus, system 100 has been described with respect to generating data queries and executing the queries against a database. Additional details regarding prompting a generative AI model, post-processing queries, and generating deep data maps are described in the following sections (as well as elsewhere herein).

### III. Embodiments for Sample Data Generation

As described herein, data queries can rely on knowledge of the query language and knowledge of the database to perform a database operation. In some implementations, a generative AI, such as an LLM, has parametric knowledge of the query language (e.g., from an original data source or from fine-tuning). However, knowledge of the database to be queried typically requires more specialized knowledge obtained through experience or experimentation. Generative AI alone may require a user to impart knowledge for specific values within a database to reduce the rate of hallucination (i.e., generation of incorrect or misleading results) when converting an NL question to a data query. This requires additional input and time from the user or application providing the NL question, in particular for queries made with respect to large databases.

In an aspect of the present disclosure, methods, systems, and computer-readable storage media described herein instill a generative AI model with additional insight to assist the model in converting an NL question to a data query. For instance, in accordance with an embodiment, augmentation system 116 of FIG. 1 is utilized to generate and/or otherwise manage sample data. Pre-processor 128 utilizes the sample data to provide additional insight to model interface 130 for use in generating a prompt to be provided to generative AI model 138 to cause generative AI model 138 to convert a NL question to a data query.

Embodiments of augmentation system 116 are configured in various ways to manage and/or generate sample data. For instance, vector database generator 122 of FIG. 1 generates sample data to be included in vector database 144. Vector database generator 122 is configurable in various ways. For example, FIG. 2 shows a block diagram of a system 200 for generating a vector database, in accordance with an example embodiment. As shown in FIG. 2, system 200 comprises vector database generator 122, generative AI model 138, and vector database 144, as described with respect to FIG. 1. Vector database generator 122 of FIG. 2 comprises a prompt collector 202, an embedding generator 204, a diverse query selector 206, and a database entry generator 208, each of which are implemented as components and/or services of vector database generator 122. To better understand the operation of vector database generator 122 of FIG. 2, FIG. 2 is described with respect to FIG. 3. FIG. 3 shows a flowchart 300 of a process for generating a vector database, in accordance with an example embodiment. In accordance with an embodiment, vector database generator 122 of FIG. 2 operates according to flowchart 300. Not all steps of flowchart 300 need be performed in all embodiments. Further structural and operational embodiments will be apparent to persons skilled in the relevant art(s) based on the following descriptions of FIGS. 2 and 3.

Flowchart 300 begins with step 302. In step 302, a prompt previously provided to a generative AI model is received. For example, as shown in FIG. 2, prompt collector 202 receives a historic prompt 224. Historic prompt 224 in an embodiment is stored in historic query data 142. Historic prompt 224 is a previous prompt provided to generative AI model (e.g., by or as instructed by application 134). Prompt collector 202 provides one or more prompts including historic prompt 224 to embedding generator 204 as "prompts 212".

In step 304, an embedding model is utilized to determine an embedding semantically describing the prompt. For example, as shown in FIG. 2, embedding generator 204 receives one or more prompts 212 and utilizes generative AI model 138 to determine embeddings that semantically describe the one or more prompts. For instance, embedding generator 204 provides a series of requests 214 (e.g., simultaneously or sequentially) that cause generative AI model 138 to (e.g., simultaneously, sequentially, in a batch, etc.) generate responses 216. Requests 214 comprise a request for determining a prompt embedding for a corresponding prompt of prompts 212. Responses 216 comprise the prompt embedding for the corresponding prompt of prompts 212. Embedding generator 204 provides the prompt embeddings for the one or more prompts as embeddings 218. Optionally, and as further described with respect to FIG. 4, diverse query selector 206 determines a subset of embeddings 218 to be stored. Alternatively, flowchart continues to step 306.

In step 306, an entry is stored in a vector database comprising a mapping of the embedding to a data query. For example, database entry generator 208 stores the embeddings 218 in association with their corresponding prompt and a data query in vector database 144 via a storage signal 222. An example table of sample prompts and sample queries stored in vector database 144 are shown in the following table:

| **Prompt** | **Completion** |
|---|---|
| **count groups** | groups/$count |
| **group members count** | groups/{group-id}/transitiveMembers/$count |
| **roles assigned to user** | roleManagement/directory/roleAssignments? $filter=principalId eq '{ user-id }'&$expand=roleDefinition |
| **recently deleted users** | directory/deletedItems/graph.user?$count=true&$top=10& $orderBy=deletedDateTime desc |
| **suspicious login activity for user** | auditLogs/signIns?$filter=userId eq '{user-id}' and (riskLevelDuringSignIn ne 'none' or riskEventTypes_v2/any(r:r ne 'none')) |

In some embodiments, a prompt is associated with a marker that denotes an operation is unsupported (e.g., an "unsupported prompt" marker. This signals to a generative AI model to avoid generating a query plan and inform the requesting user or application that their request cannot be executed. Alternatively, a marker denotes if a client side operation should be performed instead of a data query.

As shown in FIG. 2, in some embodiments, vector database generator 122 comprises a diverse query selector. Diverse query selector 206 operates in various ways, in embodiments. For instance, FIG. 4 shows a flowchart 400 of a process for generating a vector database, in accordance with another example embodiment. In accordance with an embodiment, vector database generator 122 of FIG. 2 operates according to flowchart 400. Not all steps of flowchart 400 need be performed in all embodiments. Further structural and operational embodiments will be apparent to persons skilled in the relevant art(s) based on the following description of FIG. 4 with respect to FIG. 2.

Flowchart 400 begins with step 402. In step 402, a subset of prompts with a level of diversity that satisfies a diversity criterion is determined. For example, in accordance with an embodiment, diverse query selector 206 determines a subset of prompts with a level of diversity that satisfies a diversity criterion. For instance, suppose prompts 212 comprised a plurality of prompts. In this context, diverse query selector 206 clusters the prompts based on respective embeddings 218, where each cluster represents a sub-group of semantically similar prompts (e.g., prompts with a level of semantic similarity that satisfies a criterion). In this context, each cluster has a centroid that represents an average of the respective cluster. In an embodiment, the centroid represents a data query (or group of similar data queries) the prompts result in. In order to select diverse prompts for a cluster, diverse query selector 206 selects a (e.g., predetermined) number of prompts that are within different ranges of distance in vector space from the centroid of their respective cluster. In this manner, diverse query selector 206 provides a broad range of NL queries that result in the same or (e.g., substantially) similar data queries.

In step 404, an entry is stored in a vector database comprising a mapping of embeddings of the subset of prompts to a data query. For example, database entry generator 208 stores the subset of prompts in vector database 144 in a similar manner as described with respect to step 306.

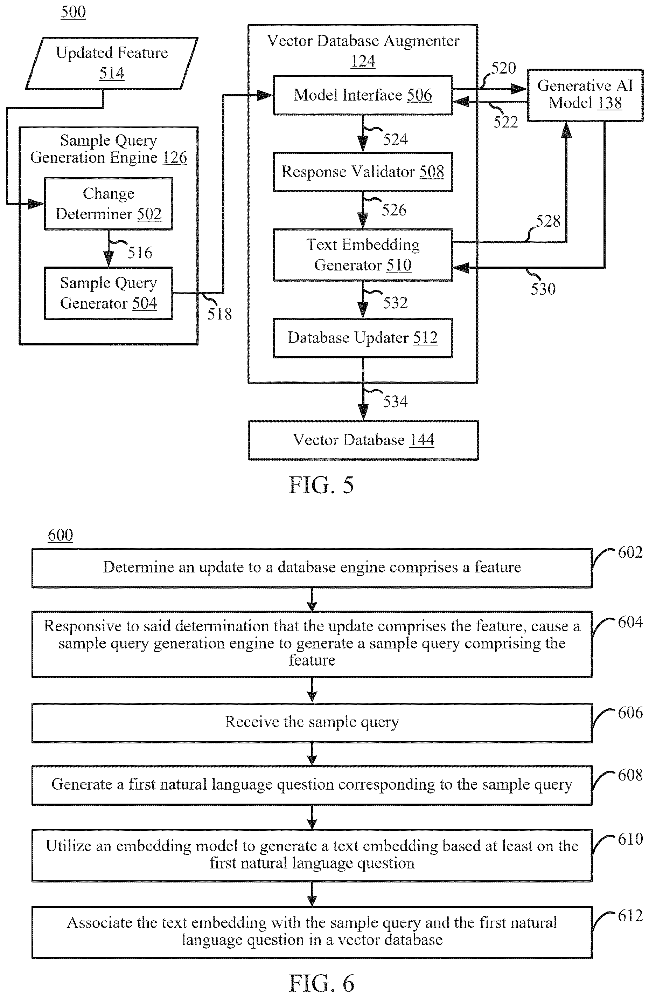

As described elsewhere herein, vector database augmenter 124 is configured to update or otherwise modify vector database 144. Vector database augmenter 124 is configurable in various ways, in embodiments. For example, FIG. 5 shows a block diagram of a system 500 for updating a vector database, in accordance with an example embodiment. As shown in FIG. 5, system 500 comprises vector database augmenter 124, sample query generation engine 126, generative AI model 138, and vector database 144, as described with respect to FIG. 1. As also shown in FIG. 5: vector augmenter 124 comprises a model interface 506, a response validator 508, a text embedding generator 510, a database updater 512 and sample query generation engine 126 comprises a change determiner 502 and a sample query generator 504, each of which are implemented as components and/or subservices of respective components/services. To better understand the operation of vector database augmenter 124, FIG. 5 is described with respect to FIG. 6. FIG. 6 shows a flowchart 600 of a process for updating a vector database, in accordance with an example embodiment. In accordance with an embodiment, vector database augmenter 124 of FIG. 6 operates according to flowchart 600. Not all steps of flowchart 600 need be performed in all embodiments. Further structural and operational embodiments will be apparent to persons skilled in the relevant art(s) based on the following descriptions of FIGS. 5 and 6.

Flowchart 600 begins with step 602. In step 602, an update to a database engine is determined to comprise a feature. For example, sample query generation engine 126 or vector database augmenter determine updated feature 514 is added to database engine 140 or database 108. The update could be based on a change log of database engine 140. As shown in FIG. 5, change determiner 502 is shown as a subcomponent of sample query generation engine 126. Alternative, change determiner 502 is a subcomponent of vector database augmenter 124. In an embodiment, updated feature 514 is determined by comparing a schema of database engine 140 and a previous version of database engine 140.

In step 604, responsive to the determination made in step 602, a sample query generation engine is caused to generate a sample query comprising the feature. For example, sample query generation engine 126 generates a sample query comprising updated feature 514. For instance, sample query generator 504 generates sample query 518 comprising updated feature 514 responsive to change indication 516.

In step 606, the sample query is received. For instance, model interface 506 receives sample query 518.

In step 608, a first NL question corresponding to the sample query is generated. For example, model interface 506 (also referred to as NL question generator 506, in some embodiments) generates NL query 524. In an embodiment, model interface 506 provides a prompt 520 to generative AI model 138 to cause generative AI model 138 to generate NL query 524 based on the prompt. In this context, a result 522 comprising NL query 524 is received from generative AI model 138. In some embodiments, response validator 508 validates a validity (e.g., grammatical syntax, language structure, semantic similarity to sample query 518, and/or the like) of NL query 524. In some embodiments, multiple NL queries are generated.

In step 610, an embedding model is utilized to generate a text embedding based at least on the first NL question. For example, in an embodiment, text embedding generator 510 utilizes generative AI model 138 to generate a text embedding based on NL query 524 (or validated NL query 526). Text embedding generator 510 receives a response 530 from generative AI model 138 comprising embeddings 532 and provides embeddings 532 to database updater 512.

In step 612, the text embedding is associated with the sample query and the first NL question in a vector database. For example, database updater 512 updates vector database 144 via update signal 534 to include an association of text embedding 532 to NL query 524 and sample query 518. In this context, vector database augmenter 124 is able to update vector database 144 to stay up-to-date with changes in database engine 140 and/or database 108, reducing requirements for developers and/or applications to know specific query language syntax of database engine 140 and/or database 108.

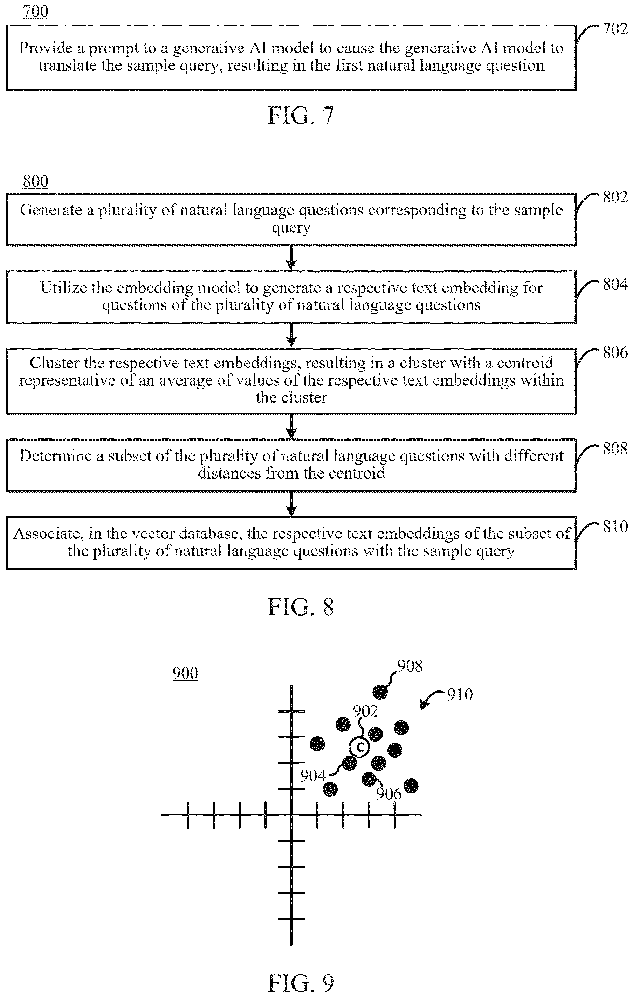

Step 608 of FIG. 6 can be performed in various ways, in embodiments. FIG. 7 shows a flowchart 700 of a process for generating a NL question, in accordance with an example embodiment. In accordance with an embodiment, model interface 506 of FIG. 5 operates according to flowchart 700. Not all steps of flowchart 700 need be performed in all embodiments. Further structural and operational embodiments will be apparent to persons skilled in the relevant art(s) based on the following description of FIG. 7 with respect to FIG. 5.

Flowchart 700 comprises step 702. In step 702, a prompt is provided to a generative AI model to cause the generative AI model to translate the sample query, resulting in the first NL question. For example, in an embodiment, model interface 506 provides prompt 520 to generative AI model 138 to cause generative AI model 138 to translate sample query 518, result in NL question 524. An example of prompt 520 is shown below:

| |
|---|
| Transform the following query language query in 5 natural language questions or statements: ~/users?$select=id,accountEnabled&$filter=accountEnabled eq false |
| Use the following information to generate your questions or statements: |
| - Path Description: Provides operations to manage the collection of user entities. |
| - Operation Description: Retrieve a list of user objects. |
| - Response Entity Type: userCollectionResponse |
| - Response Entity Description: Collection of user |
| Properties: |
| - id Type: guide |
| - id Description: The user object identifier in Platform User ID. |
| - accountEnabled Type: Boolean |
| - accountEnabled Description: 'true if the account is enabled; otherwise, false. Default is true. Supports $filter (eq, ne, not, in). Callers in Global Administrator and Cloud Device Administrator roles can set this property. |

In an embodiment, the prompt specifies that query parameters and/or properties are to be represented in the generated question or statement.

In a non-limiting example with respect to the above-recited example prompt, example generated questions/statements could be:
- Tell me the IDs of all the users that are not enabled.
- Provide me with the list of GUIDs for users whose accountEnabled property is set to false.
- I need a report of all users with a disabled account, showing only their IDs and accountEnabled statuses.
- Which users in our directory have their accountEnabled attribute marked as false, and what are their IDs?
- What are the identifiers of the users with a disabled account?

The generated questions or statements are checked for accuracy, revised, and/or new questions with the specific queries are added to the list. Text embeddings are generated for each question and are associated with the query they were generated from. The data is stored in vector database 144.

In some embodiments, vector database augmenter 124 updates a vector database to include semantically diverse queries. For instance, FIG. 8 shows a flowchart 800 of a process for updating a vector database, in accordance with an example embodiment. In an embodiment, vector database augmenter 124 of FIG. 5 operates according to flowchart 800. Not all steps of flowchart 800 need be performed in all embodiments. Further structural and operational embodiments will be apparent to persons skilled in the relevant art(s) based on the following description of FIG. 8 with respect to FIG. 5.

Flowchart 800 begins with step 802. In step 802, a plurality of NL questions corresponding to the sample query is generated. For example, in an embodiment, model interface 506 generates a plurality of NL questions corresponding to sample query 518.

In step 804, the embedding model is utilized to generate a respective text embedding for questions of the plurality of NL questions. For example, text embedding generator 510 utilizes generative AI model 138 to generate respective text embeddings for each question of the plurality of NL questions.

In step 806, the respective text embeddings are clustered, resulting in a cluster with a centroid representative of an average of values of the respective text embeddings within the cluster. For example, database updater 512, in an embodiment, clusters the plurality of text embeddings in a cluster, resulting in a cluster with a centroid representative of an average of values of the embeddings. For instance, FIG. 9 shows an example cluster diagram 900, in accordance with an example embodiment. Cluster diagram 900 shows an example cluster 910. As shown in FIG. 9, cluster 910 comprises a cluster 902 representative of an average of values of the respective text embeddings within the cluster. Respective embeddings are represented in cluster diagram as points in coordinate space. For instance, cluster diagram 900 includes a plurality of points including points 904, 906, and 908. While the coordinate space of cluster diagram 900 is depicted as two-dimensional in FIG. 9, a coordinate space can be of any dimension (e.g., depending on the number of values in a vector).

In step 808, a subset of the plurality of NL questions are determined with different distances from the centroid. For example, in an embodiment, database updater determines a subset of NL questions with different distances from the centroid. In an embodiment, the number of questions to select in the subset are predetermined, a default number, or determined based on a user/tenant setting. In an example implementation with respect to FIG. 5 and FIG. 9, suppose database updater 512 selected NL questions corresponding to points 904, 906, and 908 as the subset of the plurality of NL questions.

In step 810, the respective text embeddings of the subset of the plurality of NL queries are associated in the vector database with the sample query. For example, database updater 512 associates the respective text embeddings and subset of NL queries in vector database 144 with sample query 518. For instance, with continued reference to FIG. 9, database updater 512 associates text embeddings of points 904, 906, and 908 to their corresponding NL question and sample query 518 in sample query 518. In this manner, a wider range of potential NL questions that should be translated to a corresponding sample query are determined and stored in vector database 144 for use as samples for providing in a prompt to generative AI model 128, thereby improving the performance of generative AI model 128 in translating a NL question into a data query.

### IV. Embodiments for Generating a Data Query

As described herein, query converter 118 operates in various manners to generate a data query from an NL question. Query converter 118 can be configured in various ways. For instance, FIG. 10 shows an example block diagram of a system 1000 for generating a data query, in accordance with an example embodiment. As shown in FIG. 10, system 1000 comprises query converter 118 (comprising pre-processor 128, model interface 130, and post-processor 132), application 134, generative AI model 138, and function calls 150 (comprising function call 152), as described with respect to FIG. 1. To better understand the operation of query converter 118 in the context of system 1000, FIG. 10 is described with respect to FIG. 11. FIG. 11 shows an example flowchart 1100 of a process for generating a data query, in accordance with an example embodiment. In accordance with an embodiment, query converter 118 of FIG. 10 operates according to flowchart 1100. Not all steps of flowchart 1100 need be performed in all embodiments. Further structural and operational embodiments will be apparent to persons skilled in the relevant art(s) based on the following description of FIGS. 10 and 11.

Flowchart 1100 begins with step 1102. In step 1102, a request associated with querying a database and comprising an NL question is received. For example, pre-processor 128 receives a request 1002 comprising an NL question (also referred to as "NL question 1002" herein). In an embodiment, the NL question is NL input requesting a query be executed against database 108 to perform a database operation. In examples, request 1002 specifies a subset of database 108 (e.g., a table, a cluster, a column within a table, etc.). In an embodiment, pre-processor 128 pre-processes NL question 1002 to generate pre-process result 1004. In an embodiment, model interface 130 determines an error or ambiguity in a natural language question and causes a prompt to be displayed in an interface of application 134 requesting additional information to resolve the error or ambiguity.

In step 1104, a first prompt comprising the first NL question is provided to a generative AI model, causing the generative AI model to determine additional information is to be determined to translate a language of the first NL question to a query language, utilize a function call of a service to determine determined information comprising the additional information, and generate a first data query based at least on the determined information. For example, model interface 130 provides prompt 1006 (comprising NL question 1002) to generative AI model 138, causing generative AI model to generate a first data query 1016 ("data query 1016" herein). Generative AI model 138 generates data query 1016 by determining additional information is to be determined to translate a language of NL question 1002 to a query language, utilizing a function call 152 of database engine 140 to determine determined information comprising the additional information, and generating data query 1016 based at least on the determined information. In this context, generative AI model 128 is utilized to decipher (e.g., complex) NL questions and generate an equivalent data query (e.g., an equivalent database query, an equivalent REST API call, and/or the like).

Depending on the implementation the first prompt causes generative AI model 128 to determine the function call (e.g. function call 152) to utilize or query converter 118 determines the function call to utilize (e.g., based on pre-process result 1004, based on information included in NL question 1002, based on an indication of additional information provided by generative AI model 138, and/or the like). Additional details regarding determining function calls are described with respect to FIGS. 12-16, as well as elsewhere herein. By automatically determining function calls, utilizing function calls to determine values, and replacing placeholders (e.g., variables) with the determined values, embodiments described herein reduce computing resources required in generating prompts and/or data queries. For instance, in an aspect prompt 1006 is not required to specify a particular parameter of a function call to be used or all of the parameters of a query to be used. Instead, prompt 1006 causes generative AI model 138 to automatically determine which additional information is needed in generating a query, utilize function calls to determine the additional information, and generate a query (or query plan, in an alternative embodiment) comprising a data query based on the additional information.

In an embodiment, the first prompt specifies one or more rules generative AI model 138 is to follow. Depending on the implementation, the one or more rules include a static rule (e.g., a rule predefined by a developer or application), a rule determined based on request 1002 (e.g., based on a schema of a database engine identified based on request 1002), a result of pre-processing functions (e.g., pre-processing result 1004), a configuration or user setting of query converter 118 (or a component thereof), and/or the like. By determining rules based on information included in or derived from request 1002 (e.g., by pre-processing activities and/or the like), embodiments of query converter 118 improve the accuracy of data queries generated by generative AI model 138, thereby reducing compute resources utilized in repairing queries and/or executing queries with errors.

In an embodiment, model interface 130 provides a series of prompts to generative AI model 138. For instance, as an example, incremental prompts are provided to generative AI model 138, where a second prompt comprises a result of the first prompt. In this manner, model interface 130 is able to correct and validate responses earlier in data query generation process, reducing rework by generative AI model 138 and errors in the data query to be provided to database engine 140. In an aspect, a first prompt is placed to cause generative AI model 138 to recognize an entity that the data query is to be performed with respect to and a second prompt is placed to cause generative AI model 138 to translate the prompt based on the recognized entity. Additional details regarding validating and correcting responses are described with respect to FIGS. 26 and 27, as well as elsewhere herein.

In another embodiment, a retrieval augmented generation (RAG) search is used to map the received NL query to semantically similar NL queries in vector database 144. In this context, the semantically similar NL queries are associated with a corresponding data query. The semantically similar NL queries and their corresponding data queries are provided in the prompt as example translations. This improves overall translation quality. Furthermore, the database can be updated as changes in database engine 140 and/or database 108 are made. Further details regarding RAG searching and similar techniques are described with respect to FIGS. 24 and 25, as well as elsewhere herein.

In an embodiment, pre-processor 128 and/or model interface 130 (or another component of augmentation system 116 and/or query converter 118) determines possible function calls (e.g., database engine function calls, API function calls, etc.) based on properties of database engine 140, application 136, and/or database 108. The determined function calls are tested against database engine 140 and/or application 136 to determine which combinations are supported. The supported function calls are utilized to train a generative AI model (e.g., generative AI model 138) that is fine-tuned and/or otherwise specialized for database engine 140, application 136, and/or database 108. In this manner, the grounding for the model is improved, as training is specified to the corresponding database engine 140, application 136, and/or database 108. This improves accuracy and validity of data queries generated by the model. Furthermore, prompts to a specialized model utilize fewer computational resources than prompts to an off-the-shelf model trained on (e.g., generic) larger amounts of data. Furthermore, automated integration with a specialized model can be integrated into a corresponding network-based computer system, improving the update and management of the model.

In an embodiment, prompt 1006 causes generative AI model 138 to bind a parameter, answer a question comprising more than one request to database engine 140, infer intent when a NL question refers to a previous question or answer, recover in case of an incorrect data query, and/or the like.

As described herein, the function call utilized by generative AI model 138 (e.g., function call 152) is used to determine determined information comprising additional information. In an embodiment, the determined information comprises paths, variables, and/or filters to include in the data query. Based on the result of the function call (e.g., the determined information) and the NL query, generative AI model 128 generates data query 1016. This causes generative AI model 138 to automatically determine parameters, paths, and/or filters without model interface 130 pre-defining/determining their values, thereby reducing the complexity in the prompt generated by model interface 130 (e.g., prompt 1006) and reducing the amount of specified information a user or application has to provide query converter 118 in a request (e.g., request 1002) to generate data query 1016.

In an embodiment, prompt 1006 causes generative AI model 128 to generate data query 1016 as an argument of a function call (e.g., function call 152). For instance, in an example, generative AI model 128 generates data query 1016 as a free-form text parameter of function call 152. In this context, prompt 1006 causes generative AI model 128 to flexibly generate data query 1016 in a manner that simplifies validation of data query 1016. For instance, since data query 1016 is generated as an argument based on a function call of a service (e.g., database engine 140, application 136, and/or the like) identified by generative AI model 128, fewer compute resources are required to interpret output of generative AI model 128, e.g., since the function call is a known function call. Furthermore, since prompt 1006 in this implementation causes generative AI model 128 to generate data query 1016 as a free-form text parameter, enumerating a strict, per-parameter structure in the prompt is not required; thereby reducing compute resources utilizes to generate prompt 1006 and reducing required knowledge or access to data of the requesting application or requesting user.

In step 1106, the first data query is received from the generative AI model. For example, post-processor 132 receives a response 1008 comprising data query 1016 from generative AI model 138.

In step 1108, the first data query is provided to the service. For example, post-processor 132 provides an action request 1010 comprising data query 1016 to database engine 140. Action request 1010 causes database engine 140 to execute data query 1016. In this context, execution of data queries and development of programming code can be improved, by improving efficiency of a developer user or an application in leveraging database engine 140. For instance, neither the developer user nor the application are required to stay up-to-date on syntax or semantics of database engine 140, as query converter 118 converts natural language to query language. In an embodiment, post-processor 132 provides data query 1016 to application 134 via action 1010, causing application 134 to provide data query 1016 to database engine 140. In this context, application 134 is able to validate data query 1016, modify data query 1016, and/or perform other operations with respect to data query 1016. Furthermore, by providing data query 1016 to application 134 to cause application 134 to provide the data query to database engine 140, such embodiments reduce the number of applications and/or devices query converter 118 is in communication with.

While step 1108 of flowchart 1100 is described with respect to providing action request 1010 to database engine 140, in some embodiments, post-processor 132 provides (or causes provision of) action request 1010 to an application (e.g., utilizing an API). For instance, in accordance with an embodiment, post-processor 132 utilizes an API of application 136 to cause application 136 to execute data query 1016 with respect to database 108. In this context, the function call utilized in step 1104 is an API function call of application 136 (e.g., an API of APIs 120). Furthermore, in an embodiment, action request 1010 is an API of APIs 120.

Thus, an example process for generating a data query has been described with respect to FIGS. 10 and 11. In an embodiment, pre-processor 128 and/or model interface 130 operate in a manner intended to determine if a NL query is in a proper format and/or if conversion is possible prior to providing a prompt to generative AI model 138. For instance, in an embodiment, pre-processor 128 and/or model interface 130: determines an ambiguity in a user from another user with the same or similar name and provide a request for selecting from the list of users with the same or similar names to application 134; determines a resulting query comprises multiple independent queries and should be executed using a batch call; determines a dependency that causes an ambiguity in the query and provide a request to the user or application for a selection to resolve the ambiguity; determine a potential ambiguity in multiple users or accounts and cause application 134 to indicate which user or account data should be queried for; determine a query exceeds a computational or financial budget and raise an error; determine a result size would exceed a threshold amount and cause application 134 to refine the NL query; and/or the like. In some situations, these steps are handled by a query validator or pre-validator subsequent to the data query being generated by generative AI model 138 and prior to the data query being executed by database engine 140.

### A. Embodiments for Determining a Function Call

As described herein, embodiments of the present disclosure cause a generative AI model to utilize a function call of a database engine to determine additional information utilized in translating a NL question into a data query. In this manner, embodiments are able to translate complex queries without requiring the requesting application to preemptively define the additional information (e.g., defining values of variable parameters, including extensive user information, and/or the like). In some embodiments, model interface 130 operates in a manner to determine a function call and include the function call in the prompt. For example, FIG. 12 shows an example flowchart 1200 of a process for generating a prompt, in accordance with an example embodiment. In accordance with an embodiment, model interface 130 of FIG. 10 operates according to one or more steps of flowchart 1200. Not all steps of flowchart 1200 need be performed in all embodiments. Further structural and operational embodiments will be apparent to persons skilled in the relevant art(s) based on the following description of FIG. 12 with respect to FIG. 10.

Flowchart 1200 begins with step 1202. In step 1202, a function call of a database engine is determined based at least on the first request. For example, in accordance with an embodiment, model interface 130 determines a function call of database engine 140 based at least on request 1002. Depending on the implementation, model interface 130 determines the function call based at least on one or more words included in request 1002, an identifier included in request 1002 (e.g., an identifier of application 134, an identifier of a user account associated therewith, and/or the like), a type of database engine indicated by request 1002, a type of application for querying a database indicated by request 1002 (e.g., application 136), an embedding of request 1002, a type of application 134, and/or the like. For instance, in a non-limiting example, request 1002 includes an indication of a type of application 134 and model interface 130 determines the type of database engine the data query is to be determined for based at least on the type of application being associated with the type of database engine. In accordance with another embodiment, request 1002 includes an indication of a type of database engine the data query is to be determined for (e.g., by including a uniform resource identifier (URI) of the database engine, by including a selection of the database engine, and/or the like). In another embodiment, request 1002 includes one or more keywords that model interface 130 compares with respect to a list of keywords to determine the type of database engine. In another embodiment, pre-processor 128 generates vector embeddings for request 1002 and model interface 130 determines the type of database engine based on the vector embeddings. For example, in an embodiment, model interface 130 determines the type of database engine based on a level of similarity between the vector embeddings of request 1002 and vector embeddings of a previous request with respect to a type of database engine satisfying a similarity criterion. Further details regarding generating vector embeddings are described with respect to FIGS. 24 and 25, as well as elsewhere herein.

In an embodiment, model interface 130 utilizes the determined type of database engine or application the data query is to be generated for to determine function calls to include in prompt 1006. For instance, in accordance with an embodiment, model interface 130 generates prompt 1006 comprising a list of function calls based on the determined type of database engine (e.g., a type of database engine 140). In another embodiment, model interface 130 performs a lookup function by transmitting a request for available function calls to database engine 140. Responsive to the request, model interface 130 receives the list of function calls and includes the list in prompt 1006. By performing the lookup function in this manner, model interface 130 reduces the amount of compute resources generative AI model 138 expends in generating a data query (e.g., as the generative AI model does not have to lookup possible function calls on its own). In another embodiment, model interface 130 generates prompt 1006 by including instructions to perform the lookup function of database engine 140. By including instructions to perform the lookup function, model interface 130 reduces the size of prompt 1006. Furthermore, in an example, if generative AI model 138 determines to generate a data query that does not utilize a function call to determine a value of a variable parameter, generative AI model 138 does not perform the lookup function, thereby reducing the number of compute resources expended. In another embodiment, model interface 130 performs (or causes generative AI model 138 to perform) a lookup function of APIs of application 136.

In step 1204, a first prompt is generated based at least on the first request and the function call. For example, in an embodiment, model interface 130 of FIG. 10 generates prompt 1006 based at least on request 1002 and the function call (or lookup function) determined in step 1202. In an embodiment, prompt 1006 comprises the NL question of request 1002 and instructions to translate language of the first NL question into a data query based at least on the function call or lookup function.

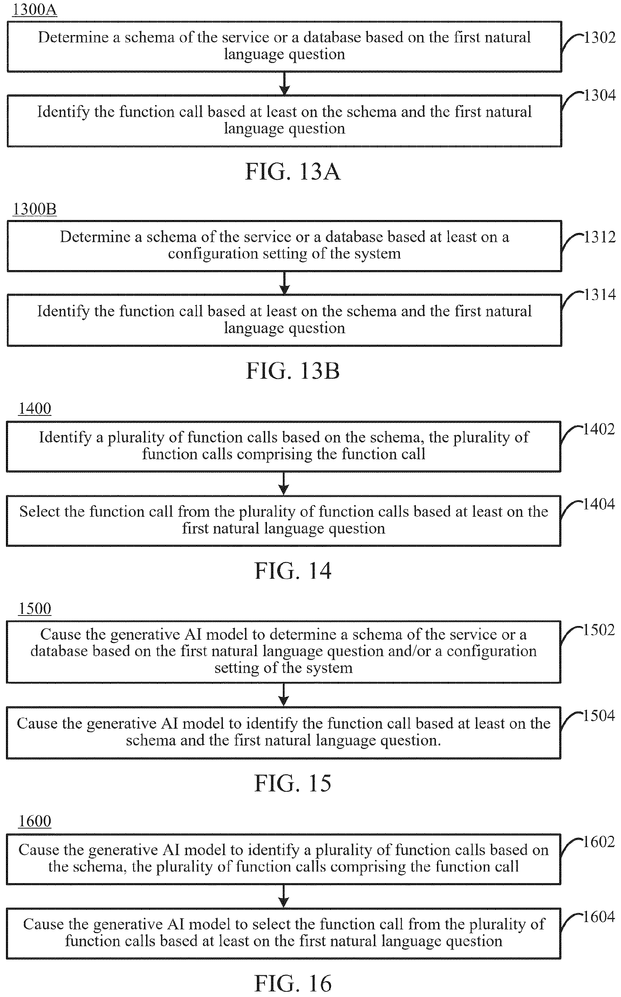

Model interface 130 operates to determine a function call to include in prompt 1006 in various ways, in embodiments. For example, FIG. 13A shows an example flowchart 1300A of a process for determining a function call, in accordance with an example embodiment. In an embodiment, model interface 130 of FIG. 10 operates according to one or more steps of flowchart 1300A. Not all steps of flowchart 1300A need be performed in all embodiments. Further structural and operational embodiments will be apparent to persons skilled in the relevant art(s) based on the following description of FIG. 13A with respect to FIG. 10.

Flowchart 1300A begins with step 1302. In step 1302, a schema of the service or a database is determined based on the first NL question. For example, model interface 130 of FIG. 10 determines a schema of database engine 140, application 136, and/or database 108 based at least on request 1002 or the NL question included in request 1002. In an embodiment, model interface 130 determines the schema based on a selection of database engine 140 made by model interface 130 or pre-processor 128, a selection of application 136 made by model interface 130 or pre-processor 128, a selection of database 108 made by model interface 130 or pre-processor 128, and/or the like. For instance, suppose pre-processor 128 or model interface 130 determines data query 1018 is to be generated for database engine 140 (e.g., based on request 1002, a selection made by application 134, a type of application 134, a vector embedding of request 1002 (or the NL question included therein), and/or the like). In this example, pre-processor 128 or model interface 130 determines a schema associated with the database engine 140. The schema can define how data is organized by databases associated with database engine 140 (e.g., data organized within database 108) and/or define one or more rules on how database engine 140 is to access, store, and/or manipulate data within a database. In embodiments, pre-processor 128 or model interface 130 can make similar determinations for database 104 and/or application 136.

In step 1304, the function call is identified based at least on the schema and the first NL question. For example, with respect to an example where data query 1016 is generated for database engine 140, model interface 130 identifies function call 152 based at least on the schema of database engine 140 and the first NL question for request 1002. For instance, in accordance with an embodiment, the determined schema specifies one or more function calls (e.g., function calls 150). In this context, model interface 130 identifies the function calls specified by the schema. In accordance with another embodiment, the schema specifies a lookup function of database engine 140. In this context, model interface 130 utilizes the lookup function in a request to database engine 140 (e.g., in an API call placed to database engine 140 corresponding to the lookup function). Responsive to the request, model interface 130 receives one or more function calls 1012 ("function calls 1012" herein) of database engine 140 (e.g., all or a subset of function calls 150).

As noted above, model interface 130 operates in various ways to determine a function call to include in prompt 1006, in embodiments. For example, FIG. 13B shows an example flowchart 1300B of a process for determining a function call, in accordance with an example embodiment. In an embodiment, model interface 130 of FIG. 10 operates according to one or more steps of flowchart 1300B. Not all steps of flowchart 1300B need be performed in all embodiments. Further structural and operational embodiments will be apparent to persons skilled in the relevant art(s) based on the following description of FIG. 13B with respect to FIG. 10.

Flowchart 1300B begins with step 1312. In step 1312, a schema of the service or a database is determined based at least on a configuration setting of the system. For example, in an embodiment, a configuration setting of query converter 118 is utilized to determine a schema of a service (e.g., application 136 or database engine 140) or database (e.g., database 108) to handle data queries. In a non-limiting example, query converter 118 is a (e.g., specialized) converter application or system for converting NL input (e.g., NL questions or queries) into data queries with a language of a specified service or database. In an embodiment, the service or database is specified by a predetermined setting of query converter 118.

In step 1314, the function call is identified based at least on the schema and the first NL question. For example, with respect to an example where data query 1016 is generated for database engine 140, model interface 130 identifies function call 152 based at least on the schema of database engine 140 determined in step 1312 and the first NL question for request 1002. For instance, in accordance with an embodiment, the determined schema specifies one or more function calls (e.g., function calls 150). In this context, model interface 130 identifies the function calls specified by the schema. In accordance with another embodiment, the schema specifies a lookup function of database engine 140. In this context, model interface 130 utilizes the lookup function in a request to database engine 140 (e.g., in an API call placed to database engine 140 corresponding to the lookup function). Responsive to the request, model interface 130 receives one or more function calls 1012 ("function calls 1012" herein) of database engine 140 (e.g., all or a subset of function calls 150).

As noted herein, model interface 130 identifies a function call in various ways, in embodiments. For example, FIG. 14 shows an example flowchart 1400 of a process for identifying a function call, in accordance with an example embodiment. In accordance with an embodiment, model interface 130 of FIG. 10 operates according to one or more steps of flowchart 1400. Not all steps of flowchart 1400 need be performed in all embodiments. Further structural and operational embodiments will be apparent to persons skilled in the relevant art(s) based on the following description of FIG. 14 with respect to FIG. 10.

Flowchart 1400 begins with step 1402. In an embodiment, step 1402 is a further embodiment of step 1304 of flowchart 1300A or step 1314 of flowchart 1300B. In step 1402, a plurality of function calls is identified based at least on the schema, the plurality of function calls comprising the function call. For example, with respect to an example where data query 1016 is generated for database engine 140, model interface 130 identifies function calls 1012 based at least on a schema of database engine 140, function calls 1012 comprising function call 152. In accordance with an embodiment, the list of function calls are determined based on a function calling tool of database engine 140 (e.g., a lookup function) that returns a list of function calls 150. In accordance with another embodiment, model interface 130 maintains a mapping of function calls to types of database engines and selects function calls 150 from the mapping based on the determination that database engine 140 is to be used. While step 1402 is described with respect to function calls 150 of database engine 140, similar steps can be performed with respect to APIs 120 of application 136.

In step 1404, the function call is selected from the plurality of function calls based at least on the first NL question. For example, with reference to an example where data query 1016 is generated for database engine 140, model interface 130 selects function call 152 from function calls 1012 based at least on the NL question included in request 1002. In an embodiment, model interface 130 selects all function calls 1012 to include in prompt 1006. In another embodiment, model interface 130 selects a subset of function calls 1012 to include in prompt 1006. For instance, depending on the implementation, model interface 130 selects the subset based at least on an entity associated with request 1002, a keyword of the NL question, a vector embedding of request 1002, an identifier included in request 1002, a function call included in a previous prompt that has a level of semantic similarity to the NL question of request 1002 that satisfies a similarity criterion, and/or the like. For instance, in a non-limiting example, model interface 130 determines an entity (e.g., a user, a user account, a tenant, a group, an organization, and/or the like) associated with request 1002. In embodiments, model interface 130 determines the entity based at least on an identifier included in request 1002, an identifier included in establishing a session with application 134, a selection in an interface of query converter 118, an embedding of request 1002, a keyword included in request 1002, and/or the like. In an embodiment, model interface 130 selects function call 152 from function calls 150 based at least on the determined entity. For instance, in accordance with an embodiment, model interface 130 determines a function call corresponding to a filter suitable for filtering data associated with the determined entity.

Thus, several example embodiments where model interface 130 determines a function call to include in prompt 1006 have been described with respect to FIGS. 10-14. In some embodiments, model interface 130 causes generative AI model 138 to determine the function call. In accordance with an embodiment, model interface 130 generates instructions for determining a function call in prompt 1006. Model interface 130 operates in various ways to cause generative AI model 138 to determine a function call, in embodiments. For example, FIG. 15 shows an example flowchart 1500 of a process for determining a function call, in accordance with another example embodiment. In accordance with an embodiment, model interface 130 of FIG. 10 operates according to one or more steps of flowchart 1500. Not all steps of flowchart 1500 need be performed in all embodiments. Further structural and operational embodiments will be apparent to persons skilled in the relevant art(s) based on the following description of FIG. 15 with respect to FIG. 10.

Flowchart 1500 begins with step 1502. In step 1502, the generative AI model is caused to determine a schema of the service or database based at least on the first NL question and/or a configuration setting of the system. For example, in accordance with an embodiment, prompt 1006 causes generative AI model 138 to determine a schema of database engine 140, a schema of application 136, and/or a schema of database 108 based at least on the NL question of request 1002 included in prompt 1006 and/or a configuration setting of query converter 118 that prompt 1006 was received from. In an embodiment, prompt 1006 explicitly comprises instructions to determine a schema of database engine 140. Alternatively, generative AI model 138 determines the schema subsequent to determining a data query is to be generated based on prompt 1006. In another embodiment, generative AI model 138 determines the schema based on an identifier (e.g., of query converter 118, of requesting application 134, of a user account associated with application 134, of database engine 140, of database 108, of application 136, and/or the like) included in prompt 1006.

In step 1504, the generative AI model is caused to identify the function call based at least on the schema and the first NL question. For example, with respect to an example where data query 1016 is generated for database engine 140, prompt 1006 causes generative AI model 138 to identify function call 152 based at least on the schema determined in step 1502 and the NL question of request 1002 included in prompt 1006. As described herein, a schema can specify one or more function calls (e.g., function calls 150, APIs 120, and/or the like) or a lookup function of database engine 140 or application 136. In the latter context, generative AI model 138 is caused to place a call utilizing the lookup function to database engine 140. Responsive to the lookup function, with respect to the example where data query 1016 is generated for database engine 140, generative AI model 138 receives one or more function calls 1014 ("function calls 1014" herein) of database engine 140 (e.g., all or a subset of function calls 150). In an embodiment, generative AI model 138 causes model interface 130 to place the lookup function call on behalf of the model. In this context, generative AI model 138 is not required to establish a connection with database engine 140, simplifying the interface of generative AI model 138 and/or database engine 140. While this example is described with respect to database engine 140, in another example, generative AI model 138 utilizes a lookup API call of application 136 to determine (e.g., a list of, a set of, and/or the like) (e.g., all) APIs of application 136 (e.g., APIs 120).

Generative AI model 138 is caused to identify a function call in various ways, in embodiments. For example, FIG. 16 shows an example flowchart 1600 of a process for identifying a function call, in accordance with another example embodiment. In accordance with an embodiment, model interface 130 of FIG. 10 operates according to one or more steps of flowchart 1600. Not all steps of flowchart 1600 need be performed in all embodiments. Further structural and operational embodiments will be apparent to persons skilled in the relevant art(s) based on the following description of FIG. 16 with respect to FIG. 10.

Flowchart 1600 begins with step 1602. In step 1602, the generative AI model is caused to identify a plurality of function calls based at least on the schema, the plurality of function calls comprising the function call. For example, prompt 1006 causes generative AI model 138 to identify function calls 1014 based at least on the schema of database engine 140. In an embodiment, function calls 1014 comprise function call 152. In an embodiment, function calls 1014 are determined utilizing a lookup function of database engine 140, learned knowledge of database engine 140 (e.g., based on training data of generative AI model 138), a public database of function calls of database 140 (e.g., public data generative AI model 138 was trained on), and/or the like.

In step 1604, the generative AI model is caused to select the function call from the plurality of function calls based at least on the first NL question. For example, prompt 1006 causes generative AI model 138 to select function call 152 from function calls 1014 based at least on the NL question included in prompt 1006. In accordance with an embodiment, prompt 1006 causes generative AI model 138 to select function call 152 in a similar manner as model interface 130 with respect to step 1404 of flowchart 1400 of FIG. 14. In accordance with an embodiment, generative AI model 138 selects function call 152 based at least on the additional information that is to be determined, e.g., the additional information described in step 1104 of flowchart 1100. In this context, generative AI model 138 determines a type of information and/or the like and determines which function call of function calls 1014 is suitable for determining the information. For instance, suppose the additional information is a user ID of a user. In this context, generative AI model 138 selects function call 152 from function calls 1014 wherein function call 152 calls a function for determining one or more user IDs of user accounts associated with database 108 or of data of database 108. By causing generative AI model to select function calls in this manner, embodiments described herein generate a prompt that causes generative AI model to improve accuracy in data queries translated from NL questions without requiring the NL question to directly specify a value of a parameter (e.g., in query language).

### B. API Call Generation Embodiments

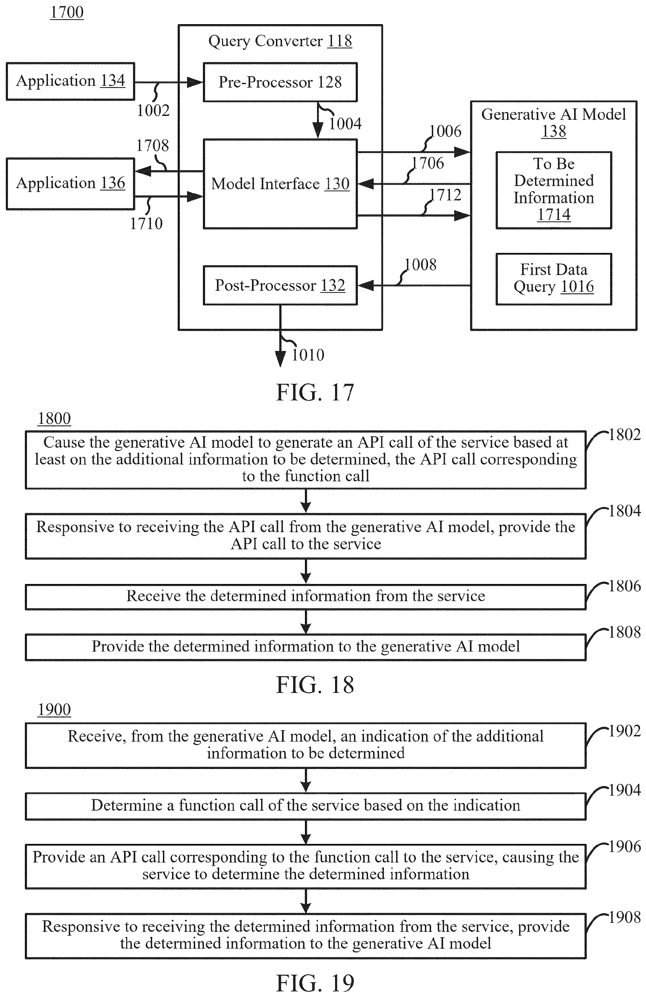

As described herein, embodiments of the present disclosure enable a generative AI model to utilize a function call to determine a value of a variable parameter. Embodiments cause generative AI models to utilize function calls in various ways. For instance, in some embodiments, query converter 118 (or a component thereof) places API calls corresponding to function calls on behalf of generative AI model 138. Query converter 118 can be configured in various ways to generate a data query utilizing API calls corresponding to function calls, in embodiments. For instance, FIG. 17 shows an example block diagram of a system 1700 for generating a data query, in accordance with an example embodiment. As shown in FIG. 17, system 1700 comprises query converter 118 (comprising pre-processor 128, model interface 130, and post-processor 132), application 134, application 136, and generative AI model 138 (determining "to be determined information 1714" (also referred to herein as "additional information that is to be determined 1714" or "TBD information 1714") and generating data query 1016), as described with respect to FIGS. 1 and 10. In embodiments, query converter 118 of FIG. 17 operates to place API calls to application 136 on behalf of generative AI model 138. Depending on the implementation, query converter 118 generates an API call or causes generative AI model 138 to generate an API call.

In some embodiments, query converter 118 operates in a manner to cause generative AI model 138 to generate an API call and utilizes the API call to determine additional information for utilization in translating an NL question into a data query. For instance, FIG. 18 shows an example flowchart 1800 of a process for determining information for use in generating a data query, in accordance with an example embodiment. In accordance with an embodiment, model interface 130 of FIG. 17 operates according to one or more steps of flowchart 1800. Not all steps of flowchart 1800 need be performed in all embodiments. Further structural and operational embodiments will be apparent to persons skilled in the relevant art(s) based on the following description of FIG. 18 with respect to FIG. 17.

Flowchart 1800 begins with step 1802. In step 1802, the generative AI model is caused to generate an API call of the service based at least on TBD information 1714, the API call corresponding to the function call. For example, model interface 130 transmits prompt 1006 to generative AI model 138, causing generative AI model to identify TBD information 1714 (e.g., an indication of information to be utilized in generating data query 1016, a type of the information, a location of the information, and/or the like), e.g., as described with respect to step 1104 of flowchart 1100 of FIG. 11. In an embodiment, TBD information 1714 comprises one or more parameters for which values are to be determined. In this context, generative AI model 138 is caused to generate an API call 1708 based at least on the one or more parameters. In an embodiment, generative AI model 138 determines a function call in a manner as described with respect to any of flowcharts 1200-1600 of FIGS. 12-16, or elsewhere herein, and generates API call 1708 based on the function call, wherein the function call is utilized for determining TBD information 1714. In an embodiment, generative AI model 138 selects the function call from function calls included in prompt 1006 and generates API call 1708 based thereon. In an embodiment, generative AI model 138 generates API call 1708 based on a schema of application 136 and/or database 108. The schema can be determined by generative AI model 138 (e.g., in a manner similar to step 1502 of flowchart 1500 of FIG. 15) or included in prompt 1006, depending on the implementation. As shown in FIG. 17, generative AI model 138 provides a response 1706 to model interface 130. In this context, response 1706 comprises API call 1708.

In step 1804, responsive to receiving the API call from the generative AI model, the API call is provided to the service. For example, model interface 130 provides API call 1708 to application 136 in response to receiving response 1706 comprising API call 1708 from generative AI model 138. In an embodiment, model interface 130 modifies API call 1708 to reference a URI of API 136. In another embodiment, model interface 130 includes a session ID of a session between application 136 and model interface 130 in API call 1708. In accordance with an embodiment, model interface 130 performs a validation step on API call 1708 prior to providing the call to application 136. The validation step can include repairing syntax or semantic errors in API call 1708, removing unnecessary language from API call 1708, correcting identifiers referenced in API call 1708, and/or otherwise validating or repairing API call 1708.

In step 1806, the determined information is received from the service. For example, model interface 130 receives determined information 1710 ("information 1710" herein) from application 136. In an embodiment, information 1710 comprises the information that is to be utilized in generating data query 1016 (e.g., a value of a parameter, additional user data, mappings, and/or other information to be used in generating a data query). In accordance with an embodiment, multiple types of information are received. In a non-limiting example, suppose data query 1016 is to be performed with respect to multiple user IDs. In this context, information 1710 comprises the multiple user IDs. In accordance with an embodiment, information 1710 comprises a table or sub-table of data of database 108. For instance, in an example where API call 1708 specified multiple user IDs and information to be returned for the IDs, information 1710 comprises a table of the multiple user IDs and their respective data (e.g., permissions associated with the user IDs, accounts associated with the user IDs, groups the user IDs belong to, region information of the user IDs, organizational information of the user IDs, and/or the like).

In step 1808, the determined information is provided to the generative AI model. For example, model interface 130 provides information 1710 to generative AI model 138 in a prompt 1712. In an embodiment, prompt 1712 specifies information 1710 is a response to API call 1708 included in response 1706. Provision of prompt 1712 causes generative AI model 138 to generate data query 1016.

Flowchart 1800 has been described with respect to generative AI model 138 generating API call 1708. In some embodiments, query converter 118 generates API call 1708 based on a response from generative AI model 138. For instance, in an implementation, model interface 130 comprises logic for (e.g., automatically) generating an API call. Model interface 130 operates in various ways to generate an API call for determining a value of a variable parameter, in embodiments. For instance, FIG. 19 shows an example flowchart 1900 of a process for determining a value of a variable parameter of a data query, in accordance with another example embodiment. In accordance with an embodiment, model interface 130 of FIG. 17 operates according to one or more steps of flowchart 1900. Not all steps of flowchart 1900 need be performed in all embodiments. Further structural and operational embodiments will be apparent to persons skilled in the relevant art(s) based on the following description of FIG. 19 with respect to FIG. 17.

Flowchart 1900 begins with step 1902. In step 1902, an indication of the additional information to be determined is received from the generative AI model. For example, suppose model interface 130 receives response 1706 comprising an indication of TBD information 1714. For instance, suppose prompt 1006 causes generative AI model 138 to identify TBD information 1714, e.g., as described with respect to step 1104 of flowchart 1100 of FIG. 11. In this context, generative AI model 138 provides response 1706 to model interface 130 requesting additional information (e.g., a value for a parameter). In an embodiment, response 1706 comprises a type of the information to be determined, a location of the information to be determined, access requirements of the information to be determined, an amount of information to be determined, a filter to implement on the information to be determined, and/or the like.

In step 1904, a function call of the database engine is determined based on the indication. For example, model interface 130 determines a function call based at least on the indication included in response 1706 received in step 1902. In an embodiment, response 1706 includes the function call to be used for determining the additional information. Alternatively, model interface 130 determines the function call based on function calls of database engine 140. For instance, in an embodiment, model interface 130 performs a lookup function of database engine 140 or otherwise accesses function calls determined in a similar manner as described with respect to FIGS. 12-14 to determine the function call. In this context, model interface 130 selects the function call from among results of the lookup function or the previously determined calls (e.g., calls 1012) suitable for determining the value of the variable parameter.

In step 1906, an API call corresponding to the function call is provided to the service, causing the service to determine the determined information comprising the additional information. For example, model interface 130 of FIG. 17 generates API call 1708 based on the function call determined in step 1904 and provides API call 1708 to application 136, causing application 136to determine information 1710. In an embodiment, model interface 130 automatically generates API call 1708 according to a rule or configuration of application 136 and/or model interface 130. For instance, in accordance with an embodiment, application 136 exposes one or more APIs (e.g., APIs 120) including an API associated with API call 1708 that model interface 130 utilizes in generating API call 1708. In accordance with an embodiment, model interface 130 generates 1708 based on an API call template. In this context, model interface 130 replaces placeholders of the API call template with information based on the determined function call, TBD information 1714, information associated with request 1002, and/or the like.

In step 1908, responsive to receiving the determined information from the database engine, the determined information is provided to the generative AI model. For example, model interface 130 of FIG. 17 receives information 1710 from application 136 and provides information 1710 to generative AI model 138 in prompt 1712, e.g., in a similar manner as described with respect to step 1808 of flowchart 1800 of FIG. 18.

### C. Query Plan Generation Embodiments

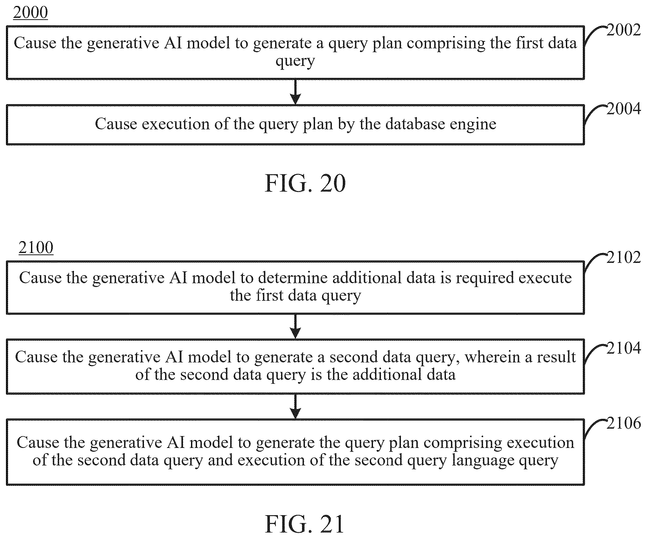

In some embodiments, model interface 130 causes generative AI model 138 to generate and/or execute a query plan. For instance, FIG. 20 shows an example flowchart 2000 of a process for executing a query plan, in accordance with an example embodiment. In accordance with an embodiment, model interface 130 of FIG. 10 operates according to flowchart 2000. Not all steps of flowchart 2000 need be performed in all embodiments. Further structural and operational embodiments will be apparent to persons skilled in the relevant art(s) based on the following description of FIG. 20 with respect to FIG. 10.

Flowchart 2000 begins with step 2002. In step 2002, the generative AI model is caused to generate a query plan comprising the first data query. For example, model interface 130 provides prompt 1006 to generative AI model 138 to cause generative AI model 138 to generate a query plan comprising data query 1016. In an embodiment, generative AI model 138 generates the query plan as a series of chained queries, wherein at least one query is dependent on the execution of another query, and wherein generative AI model 138 determines the dependency based at least on NL question 1002. In accordance with an embodiment, response 1008 comprises the query plan comprising data query 1016. In an embodiment, response 1008 comprising the query plan includes a reasoning for (e.g., each) query in the plan. For instance, in an embodiment where the query plan comprises a chain of queries, a reason for a dependency of one query on another is provided (e.g., a first query is used to determine a group ID of a group a user is associated with and a second query is used to determine a characteristic of the group based at least on the group ID). In another aspect, the response specifies how the query plan results in an answer to the NL question. In an embodiment, a query is generated as a uniform resource locator (URL).

In step 2004, execution of the query plan by the database engine is caused. For example, post-processor 132 causes execution of the query plan included in response 1008 by database engine 140 or application 136. In an embodiment, post-processor 132 provides the entire query plan to database engine 140 or application 136 as part of action 1010. In another embodiment, post-processor 132 provides (e.g., individual, pairs of, or subgroups of) queries to database engine 140 or application 136 as part of action 1010. In an embodiment, the query plan specifies how post-processor 132 is to provide queries to database engine 140 or application 136. For instance, in accordance with an embodiment further described with respect to FIG. 21, the query plan specifies executing a first query of the query plan, receiving a result of the executed query, and including the result of the executed query as an argument of a second query of the query plan.

Generative AI model is caused to generate a query plan in various ways, in embodiments. For instance, FIG. 21 shows an example flowchart 2100 of a process for generating a query plan, in accordance with an example embodiment. In accordance with an embodiment, model interface 130 of FIG. 10 operates according to flowchart 2100. Not all steps of flowchart 2100 need be performed in all embodiments. Further structural and operational embodiments will be apparent to persons skilled in the relevant art(s) based on the following description of FIG. 21 with respect to FIG. 10.

Flowchart 2100 begins with step 2102. In step 2102, the generative AI model is caused to determine additional data is required to execute the first data query. For example, prompt 1006 causes generative AI model to determine additional data required to execute data query 1016. In an embodiment, prompt 1006 determines the additional data required based at least on NL query 1002, a parameter of data query 1016, and/or the like.

In step 2104, the generative AI model is caused to generate a second data query, wherein a result of the second data query is the additional data. For example, prompt 1006 causes generative AI model 138 to generate a second data query wherein a result of the second data query is the additional data. Generative AI model 138 generates the second data query in a similar manner as described with respect to data query 1016.

In step 2106, the generative AI model is caused to generate the query plan comprising execution of the second data query and execution of the first data query. For example, prompt 1006 causes generative AI model 138 to generate a query plan comprising execution of the second data query and execution of data query 1016. In an embodiment, the execution of data query 1018 passes a result of the execution of the second data query as an argument thereof. In this context, model interface 130 utilizes generative AI model 138 to (e.g., efficiently) handle a multi-step task where multiple queries are chained together.

In an embodiment, subsequent to step 2106, the query plan is executed in a similar manner as described with respect to step 2004 of FIG. 20. For instance, in an embodiment, post-processor 132 causes execution of the query plan comprising the second data query and data query 1018 by causing execution of the second data query by database engine 140 or application 136, receiving a response to the second data query comprising the additional data, inserting the additional data as an argument of data query 1018, and causing execution of data query 1018 by database engine 140 or application 136. In an alternative embodiment, database engine 140 is a database engine that can handle nested queries or application 136 is an application that can handle nested API calls. In this context, post-processor 132 provides a nested query version of second data query 1018 comprising the third data query as an argument thereof.

### D. Embodiments Utilizing Previous Prompt or Result Data

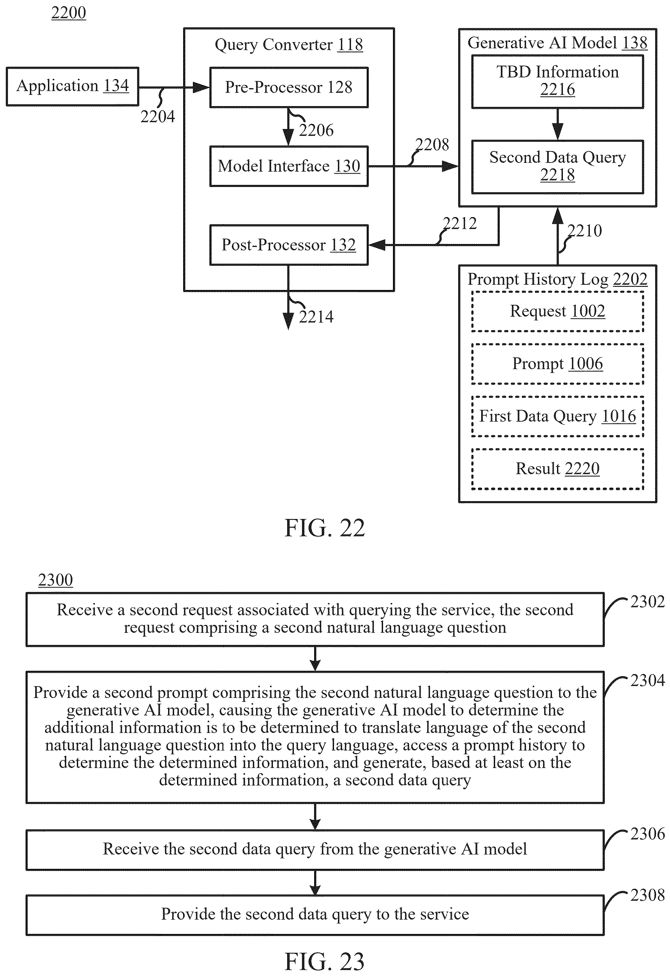

In embodiments, query converter 118 can cause generative AI model 138 to generate a data query or a query plan based at least on previous prompts or results of prompts. Systems can be configured in various ways to cause generative AI model 138 to utilize previous prompts or results of prompts. For instance, FIG. 22 shows an example block diagram of a system 2200 for generating a data query based on a prompt history log, in accordance with an example embodiment. As shown in FIG. 22, system 2200 comprises query converter 118 (comprising pre-processor 128, model interface 130, and post-processor 132), application 134, and generative AI model 138, as described with respect to FIG. 1, as well as a prompt history log 2202. Prompt history log 2202 comprises a log of previous prompts, responses to prompts, variable parameters, and/or values of variable parameters. In accordance with an embodiment, prompt history log 2202 is stored in memory accessible to generative AI model 138 and/or query converter 118 (or a subcomponent thereof). For instance, in an embodiment, prompt history log 2202 is stored in storage 114 of FIG. 1. In accordance with an embodiment, query converter 118 and/or generative AI model 138 update prompt history log 2202 based at least on information provided between model interface 130 and generative AI model 138, information determined by query converter 118 (e.g., based on a function call of database engine 140), information determined by generative AI model 138 (e.g., based on a prompt provided thereto), and/or the like. For instance, as optionally shown in FIG. 22, prompt history log 2202 in an embodiment comprises request 1002, prompt 1006, data query 1016, and/or a result 2220. In an embodiment, result 2220 is a result of execution of data query 1016. In an embodiment, prompt history log 2202 comprises a chat history corresponding to a session between application 134 and generative AI model 138. Depending on the implementation, prompt history log 2202 is maintained by generative AI model 138, query converter 118, application 134, or another computing device or service.

To better understand the operation of system 2200, FIG. 22 is described with respect to FIG. 23. FIG. 23 shows an example flowchart 2300 of a process for generating a data query based on a prompt history log, in accordance with an example embodiment. In accordance with an embodiment, system 2200 of FIG. 22 operates according to flowchart 2300. Not all steps of flowchart 2300 need be performed in all embodiments. Further structural and operational embodiments will be apparent to persons skilled in the relevant art(s) based on the following description of FIGS. 22 and 23.

Flowchart 2300 begins with step 2302. In step 2302, a second request associated with querying the database is received, the second request comprising a second NL question. For example, pre-processor 128 receives a request 2204 associated with querying database 108 in a similar manner as described with respect to request 1002 and step 1102 of flowchart 1100 of FIG. 11. In an embodiment, request 2204 comprises an NL question different from the NL question included in request 1002. In an embodiment, request 2204 is a subsequent request in the same chat session as the session request 1002 was received in. In an embodiment, pre-processor 128 pre-processes request 2204 and provides a pre-process result 2206 to model interface 130. Alternatively, request 2204 is provided (e.g., directly) to model interface 130.

In step 2304, a second prompt comprising the second NL question is provided to the generative artificial intelligence model to cause the generative artificial intelligence model to determine the additional information is to be determined to translate language of the second NL question into the query language, access a prompt history log to determine the additional information, and generate, based at least on the determined additional information, a second data query. For example, model interface 130 of FIG. 22 generates a second prompt 2208 in a similar manner as described with respect to model interface 130 generating prompt 1006. In an embodiment, prompt 2208 causes generative AI model 138 to generate a second data query 2218 ("data query 2218" herein). Generative AI model 138 can generate data query 2218 in various ways, in an embodiments. For instance, in an embodiment, prompt 2208 causes generative AI model 138 to generate data query 2218 in a similar manner as data query 1016.

In an embodiment, prompt 2208 causes generative AI model 138 to determine an intent based on data in prompt history log 2202 and the second NL question. For example, in an embodiment, generative AI model 138 determines similar information utilized to determine data query 1016 is to be determined to generate data query 2218. In another embodiment, generative AI model 138 determines other information related to data query 1016 (e.g., generation thereof and/or execution thereof) is to be determined to generate data query 2218. In either context, prompt 2208 causes generative AI model 138 to access prompt history log 2202 to determine the information associated with generation of and/or execution of data query 1016 (e.g., request 1002, prompt 1006, data query 1016, result 2220, and/or other information related to data query 1016). In embodiments, generative AI model 138 utilizes the information to generate data query 2218. By utilizing prompt history log 2202, prompt 2208 causes generative AI model 138 to generate data queries without having to re-utilize function calls to determine values already determined in responding to previous prompts, thereby reducing redundant compute resource utilization. In an embodiment, generative AI model 128 selects sentences, statements, responses, questions, and/or answers in prompt history log 2202 with embeddings that have a level of semantic similarity to a NL query that satisfies a criterion. Example similarity criterion include, but are not limited to, a number of similar words, a reference to the same data, values of embeddings within a predetermined distance in vector space, a predetermined number of matching embeddings, and/or the like.

In step 2306, the second data query is received from the generative artificial intelligence model. For example, post-processor 132 receives a response 2212 comprising data query 2218 from generative AI model 138, e.g., in a similar manner as described with respect to step 1106 of flowchart 1100 of FIG. 11.

In step 2308, the second data query is caused to be executed by the service. For example, post-processor 132 causes data query 2218 to be executed by database engine 140 or application 136, e.g., in a similar manner as described with respect to step 1108 of flowchart 1100 of FIG. 11, as well as elsewhere herein. In an embodiment, execution of data query 2218 is part of the same query plan comprising data query 1016.

### V. Prompt Pre-Processing Embodiments

As described elsewhere herein, some embodiments of query converters pre-process prompts to include sample data that instills a generative AI model with additional insight to assist the model in converting a NL question to a data query. For instance, pre-processor 128 is configurable and operable in various ways to instill additional insight. For example, FIG. 24 shows an example block diagram of a system 2400 for generating a data query, in accordance with an example embodiment. As shown in FIG. 24, system 2400 comprises pre-processor 128, model interface 130, application 134, generative AI model 138, and vector database 144, as described with respect to FIG. 1. As also shown in FIG. 24, pre-processor 128 comprises a schema processor 2402, a synthetic data filter 2404, and a synthetic data filter 2406. To better understand the operation of system 2400, FIG. 24 is described with respect to FIG. 25. FIG. 25 shows an example flowchart 2500 of a process for prompting a generative artificial intelligence model, in accordance with an example embodiment. In accordance with an embodiment, system 2400 of FIG. 24 operates according to flowchart 2500. Not all steps of flowchart 2500 need be performed in all embodiments. Further structural and operational embodiments will be apparent to persons skilled in the relevant art(s) based on the following description of FIGS. 24 and 25.

Flowchart 2500 begins with step 2502. In step 2502, an intent is determined based at least on the NL question. For example, intent determiner 2402 determines an intent based at least on NL question 1002. Examples of intent include, but are not limited to, a context with respect to a previously executed data query, a context with respect to a previously generated data query, a context with respect to a previous prompt to generative AI model 138, a context of a result of a previous data query, a context of a response received from generative AI model 138, and/or the like. In an embodiment, intent determiner 2402 utilizes a chat history between application 134 (or an associated user account) and generative AI model 138 (e.g., prompt history log 2202 of FIG. 22) to determine the intent (e.g., based on a keyword included in the NL question). In an embodiment, a chat management system manages a chat history. In an embodiment, embeddings of the NL question and embeddings of responses in the chat management system are utilized to determine if the NL question is related to a previous response or message.

As a further non-limiting example, the question a user has is not always the most recent chat message provided to generative AI model 138 from application 134. In some cases, a prompt is to be generated using one or more messages within the last N messages of history (e.g., the last three messages), as a previous question can be referred to by a subsequent question. For instance, given the following example:

| |
|---|
| **User:** What are the most used apps this week? |
| **Assistant:** these are the top 3 apps with the most sign-ins in the last 7 days: |
| 1) {displayName 1} (Id {123}), 3950 sign-ins |
| 2) {displayName 2} (Id {456}), 3276 sign-ins |
| 3) {displayName 3} (Id {789}), 2661 sign-ins |
| **User:** tell me if the second app had any risky sign-ins in that time. |

In this case, pre-processor 128 generates a question based on both of the user's messages, e.g., "Did any risky users log into the app with Id {456} in the past week?" This generated question is treated as the NL question to be translated to a data query. In an embodiment, both of the users' messages are provided to a generative AI model to determine the generated question.

In step 2504, a query embedding is determined based at least on the NL question. For example, schema processor 2404 receives intent information 2408 comprising NL query 1002 and utilizes generative AI model 138 to determine a query embedding based at least on NL query 1002, e.g., by providing a request 2410 to generative AI model 138 and receiving a response 2412 from the model, where response 2412 comprises query embedding 2414. In an embodiment, schema processor 2404 determines a schema of data (e.g., list of tables, available tables, available properties, property types, etc.).

In step 2506, a vector database is utilized to determine a level of similarity between the text embedding and the query embedding satisfies a similarity criterion. For example, synthetic data filter 2406 utilizes vector database 144 to determine a level of similarity between a text embedding of a sample query and query embedding 2414 satisfies a similarity criterion. For example, synthetic data filter 2406 determines a level of similarity between query embedding 2412 and a text embedding of a sample query 2416 stored in vector database 144 satisfies a similarity criterion (e.g., the distance between the embeddings in vector space is below a threshold or satisfies another criterion).

In step 2508, a prompt is provided to a generative AI model, causing the generative AI model to convert the NL question to a data query, the prompt comprising a sample query as an example translation of a sample NL question. For example, model interface 130 receives a pre-process result comprising the sample query and its corresponding NL query identified by synthetic data filter 2406 and NL question 1002. Model interface 130 provides a prompt 1006 comprising the sample query as an example translation of its corresponding sample NL query along with NL query 1002, wherein prompt 1006 causes generative AI model 138 to convert NL question 1002 to data query 1018. An example prompt including the sample query and sample NL question is provided below.

| |
|---|
| Given the user's question: {user's question} |
| Write the most likely complete and valid query language query to answer the question, using the following data as examples: |
| \| question \| graph query \| operation description \| properties \| |
| \| - \| - \| - \| - \| |
| {top N **distinct** query matches by cosine similarity of the question} |
| If you think the user's question can't be answered using the examples above, reply "unsupported question". |

The prompt can be augmented with description of properties or operations for each of the matches to further improve grounding.

### VI. Post-Processing Embodiments

As described herein, some embodiments of the present disclosure operate to post-process data queries generated by generative AI model 138. For example, FIG. 26 shows an example block diagram of a system 2600 for post-processing a data query, in accordance with an example embodiment. System 2600 comprises post-processor 132, generative AI model 138, and database engine 140, as described with respect to FIG. 1. As also shown in FIG. 26, post-processor 132 comprises a pre-validator 2602, a query handler 2604, and an error handler 2606. To better understand the operation of post-processor 132 in FIG. 26, FIG. 26 is described with respect to FIG. 27. FIG. 27 shows an example flowchart 2700 of a process for post-processing a data query, in accordance with an example embodiment. In accordance with an embodiment, post-processor 132 of FIG. 26 operates according to flowchart 2700. Not all steps of flowchart 2700 need be performed in all embodiments. Further structural and operational embodiments will be apparent to persons skilled in the relevant art(s) based on the following description of FIGS. 26 and 27.

Flowchart 2700 begins with step 2702. In an embodiment, step 2702 comprises receiving a data query from generative AI model 138 or otherwise receiving a data query. For example, pre-validator 2602 receives data query 1016.

In step 2704, a determination of whether or not the first data query is valid is made. For example, pre-validator 2602 determines whether or not data query 1016 is valid, e.g., based on pre-validation criteria. In an embodiment, pre-validation utilizes user satisfaction, accuracy determination, and query efficiency statistics or estimations in order to determine if the data query is valid. For instance, in an embodiment, a user provides user-feedback (e.g., via a survey, a focus group discussion, an interview, a freeform response, and/or the like) and the results thereof are utilized to determine validity of queries. In an embodiment where data query 1016 is generated as an argument of a function call (e.g., as a (e.g., single) free-form textual parameter of the function call), pre-validator 2602 validates whether or not data query 1016 is a suitable argument for the function call. In an embodiment, pre-validator 2602 validates whether or not data query 1016 is a suitable argument for the function call based on a schema of the function call or associated service. In this context, pre-validator 2602 is able to validate data query 1016 prior to execution of the function call, thereby reducing compute resources expended on executing function calls with erroneous or otherwise invalid arguments.

In an embodiment, pre-validator 2602 removes a query or a parameter from a query plan if it is incompatible or not supported by the database engine. Depending on the implementation, the query plan or query is flagged by pre-validator 2602, a notification is provided to the user, and/or the error is provided to generative AI model 138.

In an embodiment, pre-validator 2602 evaluates a validity of data query 1018 based on embeddings of data query 1018 and embeddings of NL question 1002. For instance, in an embodiment, pre-validator 2602 utilizes generative AI model 138 to determine query embeddings of data query 1018 and text embeddings of NL question 1002. If a level of semantic similarity between the embeddings does not satisfy a similarity criterion, pre-validator 2602 determines data query 1018 is an invalid query. If the similarity criterion is satisfies, pre-validator 2602 determines data query 1018 is valid. In some embodiments, pre-validator 2602 evaluates a level of similarity between embeddings of a single query, a query plan, or a portion of a query plan with respect to embeddings of the NL question.

If the first data query is valid, flow continues to step 2706. Otherwise, flow continues to step 2714.

In step 2706, the validated version of the data query is caused to be executed by the database engine. For example, query handler 2604 receives validated query 2612 and causes it to be executed by database engine 140 (e.g., as shown in FIG. 26) or application 136 via action 1010, as described elsewhere herein.

In step 2710, a determination of whether execution of the data query was successful is made. In an embodiment, query handler 2604 receives a notification from database engine 140 or application 136 indicating whether or not the execution was successful. If execution was successful, flow continues to step 2712. Otherwise, flow continues to step 2718.

In step 2712, a result is received. For instance, in an embodiment, database engine 140 provides a result to the requester that submitted NL query 1002. For instance, in an embodiment, database engine 140 (e.g., as shown in FIG. 26) (or application 136, in an alternative where action 1010 is performed with respect to application 136) provides a result to application 134.

In step 2714, a prompt is provided to the generative AI model, the prompt comprising an indication of an error in the data query and correction instructions. For example, in suppose pre-validator 2602 determines data query 1018 is invalid. In this context, pre-validator 2602 provides a prompt 2608 to generative AI model 138, causing generative AI model to generate a repaired data query 2610 based on the error indicated by pre-validator 2602 and correction instructions.

In step 2716, a repaired data query is received from the generative AI model. For instance, pre-validator 2602 receives repaired data query 2610 and process continues to step 2704.

In step 2718, an error is received. For instance, error handler 2606 of FIG. 26 receives an error 2614 (e.g., from database engine 140, as shown in FIG. 26, or from application 136, in an embodiment where action 1010 is performed with respect to application 136) indicating execution of a query (e.g., data query 1010) was unsuccessful. In an embodiment, if the number of attempts to repair an error exceeds a (e.g., predefined) number, a response is provided to a user or application indicating of the failure to generate a valid data query. If the number of attempts has not reached the limit or there is no limit in place, error handler 2606 operates according to step 2714, e.g., providing a prompt 2616 to cause generative AI model 138 to generate repaired data query 2618, causing the process to resume at step 2704.

Thus, example error handling and query validation has been provided. In an example, an NL query can refer to relative-time information (e.g., today, last week, this month, etc.). In some embodiments, a meta-language is utilized to identify time filters and replace them at runtime. For instance, suppose the following process occurs:

| |
|---|
| **User:** list the recently deleted users |
| **GPT Code [internal]:** |
| ~/directory/deletedItems/graph.user?$filter=deletedDateTime get {TODAY - 3} |
| **Plugin Code [internal]:** replacing {TODAY - 3} with DateTime based on today's date: (2024-04-04T00:00:00Z) and executing query |
| **Assistant:** the users deleted in the last 3 days are: |
| 1) {displayName 1} (Id {123}), deleted on {DeletedDateTimel } |
| 2) {displayName 2} (Id {456}), deleted on {DeletedDateTime2} |

In this process generative AI model 138 provides a data query with a time filter "{ Today - 3}". Post-processor 132 identifies the filter and replaces it with a datetime value based on today's date, e.g., the datetime that is three days prior to the current date time.

### VII. Example Prompt Embodiments

Prompts to cause a generative AI model to translate a NL question into a data query are configurable in various ways. In an embodiment, model interface 130 generates a prompt based on a prompt template. In an embodiment, the prompt template is selected based on a type of database engine 140, application 136, or other service for interfacing with database 108. In an embodiment, model interface 130 includes a schema of database engine 140 or application 136 in the prompt. In an embodiment, the prompt includes a limitation of the service (e.g., database engine, application, or other service), a syntax of the service, a restriction of the service, an allowable parameter of the service, and/or any other criteria or constraint of the service. In this manner, the prompt defines a boundary in which generative AI model 138 is to create a data query from an NL question. Furthermore, in embodiments, post-processor 132 utilizes the boundaries defined in the prompt to determine whether or not the generated data query is valid (e.g., that it fits within the boundaries).

Prompts are configurable in various ways. For instance, FIGS. 28A-28D show example prompts 2800A, 2800B, 2800C, and 2800D to cause a generative artificial intelligence model to translate a NL question, in accordance with an example embodiment. In an embodiment, pre-processor 128 and/or model interface 130 operate in various manners described herein to generate one or more of prompts 2800A-2800D and/or a similar prompt and provide the prompt to generative AI model 138 to cause the model to generate a data query. Prompts 2800A-2800D are provided for illustrative example purposes and are not intended to be limiting. For instance, some of prompts 2800A-2800D include rules that restrict (e.g. "only", "always", "cannot") certain operations. In some embodiments fewer or more restrictions are used in a prompt to define boundaries of the prompt.

Furthermore, prompts 2800A-2800D show example schema of with respect to example database engines. In some embodiments, different prompts associated with different schema can be utilized. For instance, prompt 2800A shows a reference to a "link table." A link table is a representation of relationships between members of a group. In an alternative embodiment based on a different schema, where relationships between members of a group are represented in a different manner (e.g., in a graph representation, in a mapping representation, and/or the like). Also in prompt 2800, a reference to a "Source_ObjectID" and a "Target_ObjectID" are used. In an embodiment, an object identifier ("ObjectID") can be (e.g., any of) a type of identifier such as, but not limited to, a group identifier, a user identifier, etc. In another schema, a specific type of an identifier can be used (e.g., a group identifier, a user identifier, etc.) for referencing sources (e.g., a source group, a source user, and/or the like) and targets (e.g., a target group, a target user, and/or the like).

In some of the prompts shown in FIGS. 28A-28D, a marker titled "APIProtocol" is used to denote an API protocol used to define practices for building and/or consuming APIs. Furthermore, in the prompts, "QE" refers to a query engine and "QEQL" refers to a query language of the query engine. Database engine 140 and application 136 of FIG. 1 are examples of a query engine.

### VIII. Example Query Conversion Service Embodiments

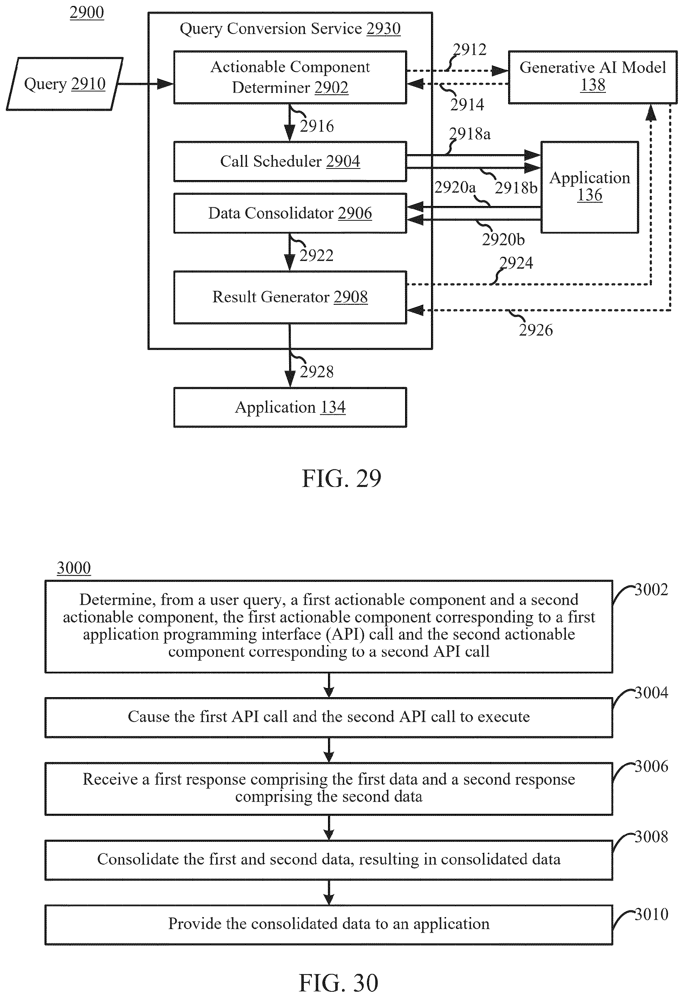

Several embodiments have been described with respect to a query converter. In some embodiments, an application is implemented to perform one or more functions similar to those described with respect to query converters. Furthermore, in some embodiments, such a service operates to determine and/or schedule queries, API calls, client-side operations, and/or the like. This service, also referred to as a "query conversion service" can be configured in various ways. For instance, FIG. 29 shows an example block diagram of a system 2900 for utilizing a query conversion service, in accordance with an example embodiment. As shown in FIG. 29, system 2900 comprises application 134, application 136, and generative AI model 138, as described with respect to FIG. 1, as well as a query conversion service 2930. Query conversion service 2930 is a service that can perform one or more functions similar to query converter 118, as well as other functions further described elsewhere herein. While query conversion service 2930 is shown in FIG. 29 interfacing with application 136, in an alternative embodiment, query conversion service 2930 interfaces with application 136. As also shown in FIG. 29, query conversion service 2930 comprises an actionable component determiner 2902, a call scheduler 2904, a data consolidator 2906, and a result generator 2908. To better understand the operation of query conversion service 2930 of FIG. 29, FIG. 29 is described with respect to FIG. 30. FIG. 30 shows an example flowchart 3000 of a process for utilizing a query conversion service, in accordance with an example embodiment. In accordance with an embodiment, query conversion service 2930 of FIG. 29 operates according to flowchart 3000. Not all steps of flowchart 3000 need be performed in all embodiments. Further structural and operational embodiments will be apparent to persons skilled in the relevant art(s) based on the following description of FIGS. 29 and 30.

Flowchart 3000 begins with step 3002. In step 3002, a first actionable component and a second actionable component are determined from a user query, first actionable component corresponds to a first API call and the second actionable component corresponds to a second API call. For example, actionable component determiner 2902 determines a first actionable component and a second actionable component from query 2910. For instance, in an aspect, actionable component determiner 2902 dissects a user query into smaller actionable components and determines a sequence of API calls. In an embodiment, the sequence of API calls is determined based on criteria and/or constraints of application 136. As a non-limiting example, suppose query 2910 is an NL question (or corresponding data query) "Show me the last 5 emails from John and any scheduled meetings with him in the coming week." In this non-limiting example, actionable component determiner 2902 decomposes query 2910 into a "fetching e-mail" actionable component and a "fetching scheduled meetings" actionable component. As shown in FIG. 29, actionable component determiner 2902 provides first and second actionable components to call scheduler 2904 as one or more components 2916 ("components 2916" herein).

In an embodiment, actionable component determiner 2902 utilizes generative AI model 138 to determine first actionable components. For instance, in an embodiment illustrated in FIG. 29, actionable component determiner 2902 provides a prompt 2912 to cause generative AI model 138 to determine the components. In this context, actionable component determiner 2902 receives a response 2914 comprising the components and, optionally, an order in which to execute corresponding calls. In some embodiments, actionable component determiner 2902 operates in a similar manner as query converter 118 of FIG. 1 to utilize generative AI model 138 to generate actionable components (e.g., where query 2910 is a NL question and the actionable components are a query plan).

In an aspect, query 2910 is a user query. A user query, in an embodiment, is a query submitted by a user in a user interface (e.g., of application 134) (e.g., a data query generated by the user or an NL question generated by the user). In another aspect, query 2910 is a query (e.g., a data query) generated by an application (e.g., application 134) (e.g., automatically, according to rules or other criteria).

In step 3004, the first API call and the second API call are caused to execute. For example, call scheduler 2904 of FIG. 2 causes first API call 2918a and second API call 2918b to execute utilizing application 136. In an embodiment, call scheduler 2904 manages and sequences the API calls. In an embodiment, call scheduler 2904 performs an optimization technique to improve the efficiency in placing the API calls (e.g., to prevent rate-limiting and/or optimize response times). In an embodiment, the sequence (or a recommended sequence) is included in a query plan comprising components 2916 generated by generative AI model 138. In an embodiment, the query plan generated by generative AI model 138 indicates whether or not a query depends on another query and/or if a query can be pipelined or simultaneously (or semi-simultaneously) executed with respect to other queries in the query plan. With continued reference to the non-limiting example described with respect to step 3002, call scheduler 2904 schedules an API call to an e-mail endpoint for fetching an e-mail and an API call to a calendar endpoint for fetching scheduled meetings.

In step 3006, a first response comprising first data and a second response comprising second data are received. For example, data consolidator 2906 of FIG. 2 receives, from application 136, first data 2920a as a response to first API call 2918a and second data 2920b as a response to second API call 2918b. For instance, with continued reference to the non-limiting example described with respect to steps 3002 and 3004, data consolidator 2906 receives a first response comprising the fetched e-mails and a second response comprising the fetched scheduled meetings.

In step 3008, the first and second data are consolidated, resulting in consolidated data. For example, data consolidator 2906 of FIG. 29 consolidates first data 2920a and second data 2920b. Data consolidator 2906 resolves and/or corrects overlaps in data (e.g., thereby fixing inconsistency or coherency issues). In another embodiment, data consolidator 2906 removes redundant data (e.g., thereby reducing complexity and/or storage space consumed thereby). As shown in FIG. 29, data consolidator 2906 provides consolidated data 2922 to result generator 2908. With continued reference to the non-limiting example described with respect to steps 3002-3006, data consolidator 2906 consolidates the e-mails and meetings based at least on relevancy and accuracy (e.g., grouping e-mails with associated schedule meetings, relevancy to a user account specified in the query, and/or the like).

In step 3010, the consolidated data is provided to an application. For example, result generator 2908 of FIG. 29 provides consolidated data as a result 2928 to application 134. In an embodiment, result 2928 causes application 134 to utilize data provided therein to perform an action or to display data provided therein in a user interface. In an embodiment, result generator 2908 generates result 2928 by transforming some or all of consolidated data 2922 into a coherent, user-friendly response structure (e.g., a structure for display in a user interface). In an embodiment, result generator 2908 translates computer language into natural language. With continued reference to the non-limiting example described with respect to steps 3002-3008, the combined data is formatted into a (e.g., singular) response for display in an interface of application 134.

In an embodiment, result generator 2908 translates results into natural language and/or images utilizing generative AI model 138. For instance, as shown in FIG. 29, result generator 2908 in an embodiment provides a prompt 2924 to generative AI model 138 comprising some or all of consolidated data 2922. In an embodiment, prompt 2924 causes generative AI model 138 to generate a formatted table (e.g., for display thereof), a natural language response, an image, a graph, a graphic, a summary, and/or the like based at least on consolidated data 2922. Result generator 2908 receives response 2926 from generative AI model 138 comprising the generated table, response, image, graph, graphic, summary, and/or the like and includes it in result 2928.

By automatically decomposing queries, executing actionable components, consolidating data, and generating results, embodiments of query conversion service 2930 improve a user interface as a user is (e.g., only) required to provide a NL question that causes query conversion service 2930 to operate and generate results in the user interface. Furthermore, query conversion service 2930 can be leveraged to locate difficult to find data (e.g., suppose a database contains a large amount of data, query conversion service 2930 can be leveraged to present a portion of the data in a user-readable manner or in a size that enables application 134 to operate more efficiently). Furthermore, query conversion service 2930 can be utilized in a manner that improves security by identifying anomalous activity and presenting it in a manner usable by a security developer user or a security application for implementation of remedial actions.

In some embodiments, the database engine a data query is to be submitted to is unable to support or fulfill all of a NL question. In this context, query conversion service 2930 operates in a manner to implement client-side operations (e.g., in addition to data queries). For instance, actionable component determiner 2902 in an embodiment determines a complexity of query 2910 that is incompatible with application 136 (or database engine 140, in an alternative embodiment) or where an expected efficiency of fulfilling the complexity utilizing a client-side operation is greater than an expected efficiency of utilizing application 136. In this aspect, call scheduler 2904 initiates calls to application 136 corresponding to their respective actionable components and another component of query conversion service 2930 performs client-side operations. In some embodiments, query conversion service 2930 executes the client-side operation and includes a result thereof as an argument of the API call to application 136. Alternatively, query conversion service 2930 utilizes a result of one or more API calls to execute the client-side operation. In another alternative, data consolidator 2906 consolidates a result of the API calls and a result of the client-side operation. For instance, suppose a received query is "What are the biggest 5 groups by user count?" In this context, query conversion service 2930 determines a complexity of the query for sorting the groups is incompatible with application 136, places an API call to application 136 to retrieve member counts for all groups, executes a client-side operation to sort the groups by member count, and extracts and presents the information from the top five groups in a user interface.

In an embodiment, query conversion service 2930 can be adapted as new API endpoints are added or existing ones are modified, improving flexibility and scalability. In embodiments, query conversion service 2930 is able to read and/or write across various services of a cloud computing platform.

### IX. Example NL Queries and Responses

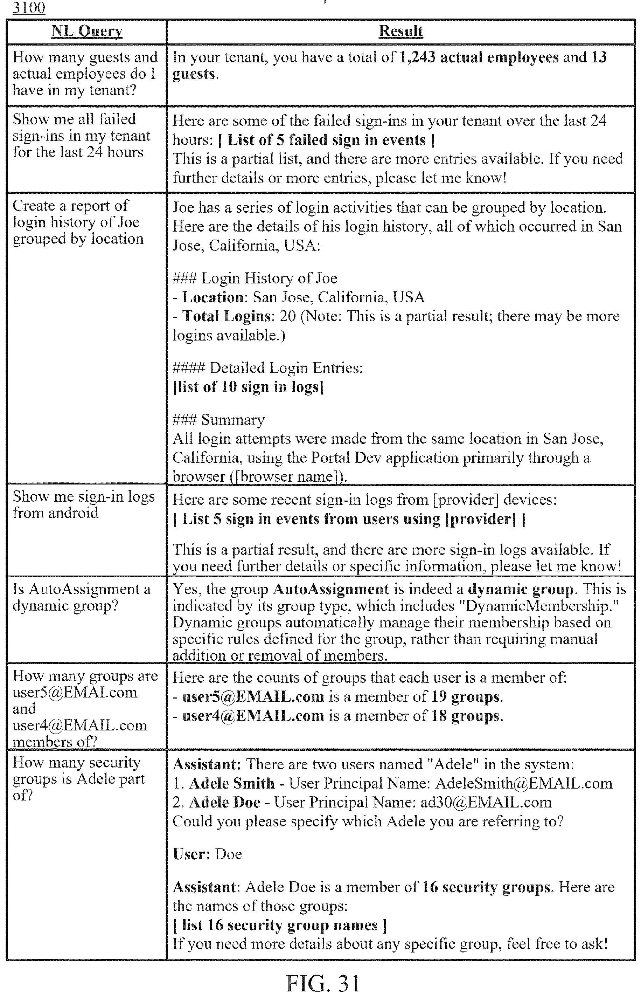

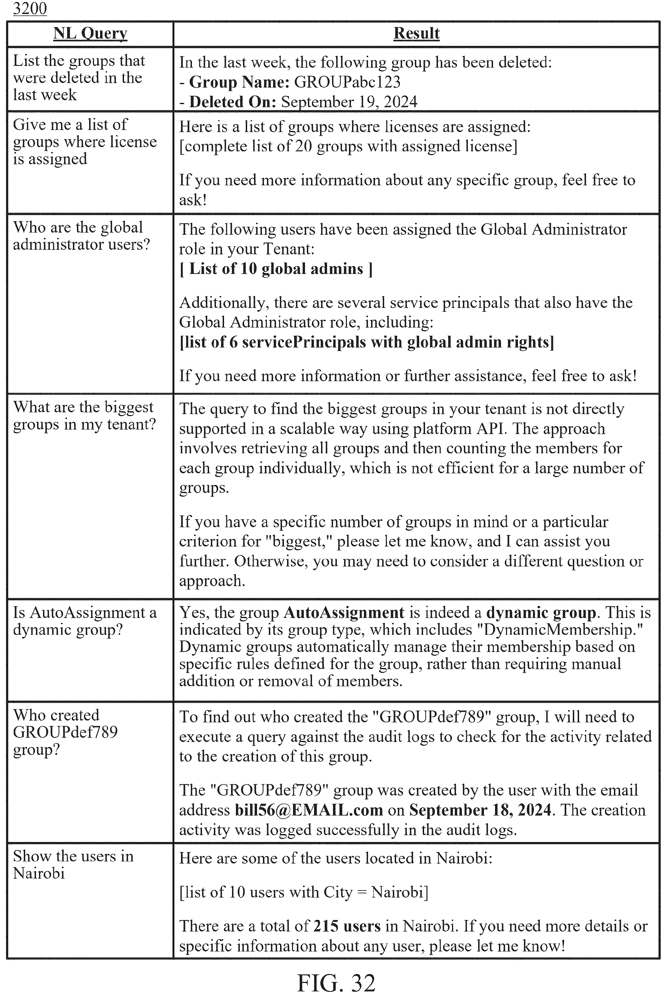

FIGS. 31 and 32 show example tables 3100 and 3200 of example NL queries and a result provided in a user interface (e.g., a user interface of application 134), in accordance with an embodiment. In an example, the result of an NL query represents a result of executing a data query generated by generative AI model 138, reasoning text generated by generative AI model 138, and/or the like.

### X. Example Computer System Implementation

Systems, devices, components, and/or techniques described herein are implemented in hardware, or hardware combined with one or both of software and/or firmware. For example, augmentation system 116, query converter 118, vector database generator 122, vector database augmenter 124, sample query generation engine 126, pre-processor 128, model interface 130, post-processor 132, application 134, application 136, generative AI model 138, database engine 140, prompt collector 202, embedding generator 204, diverse query selector 206, database entry generator 208, change determiner 502, sample query generator 504, model interface 506, response validator 508, text embedding generator 510, database updater 512, intent determiner 2402, schema processor 2404, synthetic data filter 2406, 2602, query handler 2604, error handler 2606, actionable component determiner 2902, call scheduler 2904, data consolidator 2906, result generator 2908, query conversion service 2930, and/or each of the components described therein, and/or the steps of flowcharts 300, 400, 600, 700, 800, 1100, 1200, 1300A, 1300B, 1400, 1500, 1600, 1800, 1900, 2000, 2100, 2300, 2500, 2700, and/or 3000 are each implemented as computer program code/instructions configured to be executed in one or more processors and stored in a computer readable storage medium. Alternatively, augmentation system 116, query converter 118, database engine 140, and/or each of the components described therein, and/or the steps of flowcharts 300, 400, 600, 700, 800, 1100, 1200, 1300A, 1300B, 1400, 1500, 1600, 1800, 1900, 2000, 2100, 2300, 2500, 2700, and/or 3000 are each implemented in one or more SoCs (system on chip). An SoC includes an integrated circuit chip that includes one or more of a processor (e.g., a central processing unit (CPU), microcontroller, microprocessor, digital signal processor (DSP), etc.), memory, one or more communication interfaces, and/or further circuits, and optionally executes received program code and/or include embedded firmware to perform functions.

Embodiments disclosed herein can be implemented in one or more computing devices that are mobile (a mobile device) and/or stationary (a stationary device) and include any combination of the features of such mobile and stationary computing devices. Examples of computing devices in which embodiments are implementable are described as follows with respect to FIG. 33. FIG. 33 shows a block diagram of an exemplary computing environment 3300 that includes a computing device 3302. Computing device 3302 is an example of computing device 102, query management server 104, embeddings server 106, database 108, model server 110, engine server 112, system 200, system 500, system 1000, system 1700, system 2200, system 2400, system 2600, and/or system 2900, which each include one or more of the components of computing device 3302. In some embodiments, computing device 3302 is communicatively coupled with devices (not shown in FIG. 33) external to computing environment 3300 via network 3304. In accordance with an embodiment, network 3304 is an example of network 148 of FIG. 1. Network 3304 comprises one or more networks such as local area networks (LANs), wide area networks (WANs), enterprise networks, the Internet, etc. In examples, network 3304 includes one or more wired and/or wireless portions. In some examples, network 3304 additionally or alternatively includes a cellular network for cellular communications. Computing device 3302 is described in detail as follows.

Computing device 3302 can be any of a variety of types of computing devices. Examples of computing device 3302 include a mobile computing device such as a handheld computer (e.g., a personal digital assistant (PDA)), a laptop computer, a tablet computer, a hybrid device, a notebook computer, a netbook, a mobile phone (e.g., a cell phone, a smart phone, etc.), a wearable computing device (e.g., a head-mounted augmented reality and/or virtual reality device including smart glasses), or other type of mobile computing device. In an alternative example, computing device 3302 is a stationary computing device such as a desktop computer, a personal computer (PC), a stationary server device, a minicomputer, a mainframe, a supercomputer, etc.

As shown in FIG. 33, computing device 3302 includes a variety of hardware and software components, including a processor 3310, a storage 3320, a graphics processing unit (GPU) 3342, a neural processing unit (NPU) 3344, one or more input devices 3330, one or more output devices 3350, one or more wireless modems 3360, one or more wired interfaces 3380, a power supply 3382, a location information (LI) receiver 3384, and an accelerometer 3386. Storage 3320 includes memory 3356, which includes non-removable memory 3322 and removable memory 3324, and a storage device 3388. Storage 3320 also stores an operating system 3312, application programs 3314, and application data 3316. Wireless modem(s) 3360 include a Wi-Fi modem 3362, a Bluetooth modem 3364, and a cellular modem 3366. Output device(s) 3350 includes a speaker 3352 and a display 3354. Input device(s) 3330 includes a touch screen 3332, a microphone 3334, a camera 3336, a physical keyboard 3338, and a trackball 3340. Not all components of computing device 3302 shown in FIG. 33 are present in all embodiments, additional components not shown may be present, and in a particular embodiment any combination of the components are present. In examples, components of computing device 3302 are mounted to a circuit card (e.g., a motherboard) of computing device 3302, integrated in a housing of computing device 3302, or otherwise included in computing device 3302. The components of computing device 3302 are described as follows.

In embodiments, a single processor 3310 (e.g., central processing unit (CPU), microcontroller, a microprocessor, signal processor, ASIC (application specific integrated circuit), and/or other physical hardware processor circuit) or multiple processors 3310 are present in computing device 3302 for performing such tasks as program execution, signal coding, data processing, input/output processing, power control, and/or other functions. In examples, processor 3310 is a single-core or multi-core processor, and each processor core is single-threaded or multithreaded (to provide multiple threads of execution concurrently). Processor 3310 is configured to execute program code stored in a computer readable medium, such as program code of operating system 3312 and application programs 3314 stored in storage 3320. The program code is structured to cause processor 3310 to perform operations, including the processes/methods disclosed herein. Operating system 3312 controls the allocation and usage of the components of computing device 3302 and provides support for one or more application programs 3314 (also referred to as "applications" or "apps"). In examples, application programs 3314 include common computing applications (e.g., e-mail applications, calendars, contact managers, web browsers, messaging applications), further computing applications (e.g., word processing applications, mapping applications, media player applications, productivity suite applications), one or more machine learning (ML) models, as well as applications related to the embodiments disclosed elsewhere herein. In examples, processor(s) 3310 includes one or more general processors (e.g., CPUs) configured with or coupled to one or more hardware accelerators, such as one or more NPUs 3344 and/or one or more GPUs 3342.

Any component in computing device 3302 can communicate with any other component according to function, although not all connections are shown for ease of illustration. For instance, as shown in FIG. 33, bus 3306 is a multiple signal line communication medium (e.g., conductive traces in silicon, metal traces along a motherboard, wires, etc.) present to communicatively couple processor 3310 to various other components of computing device 3302, although in other embodiments, an alternative bus, further buses, and/or one or more individual signal lines is/are present to communicatively couple components. Bus 3306 represents one or more of any of several types of bus structures, including a memory bus or memory controller, a peripheral bus, an accelerated graphics port, and a processor or local bus using any of a variety of bus architectures.

Storage 3320 is physical storage that includes one or both of memory 3356 and storage device 3388, which store operating system 3312, application programs 3314, and application data 3316 according to any distribution. Non-removable memory 3322 includes one or more of RAM (random access memory), ROM (read only memory), flash memory, a solid-state drive (SSD), a hard disk drive (e.g., a disk drive for reading from and writing to a hard disk), and/or other physical memory device type. In examples, non-removable memory 3322 includes main memory and is separate from or fabricated in a same integrated circuit as processor 3310. As shown in FIG. 33, non-removable memory 3322 stores firmware 3318 that is present to provide low-level control of hardware. Examples of firmware 3318 include BIOS (Basic Input/Output System, such as on personal computers) and boot firmware (e.g., on smart phones). In examples, removable memory 3324 is inserted into a receptacle of or is otherwise coupled to computing device 3302 and can be removed by a user from computing device 3302. Removable memory 3324 can include any suitable removable memory device type, including an SD (Secure Digital) card, a Subscriber Identity Module (SIM) card, which is well known in GSM (Global System for Mobile Communications) communication systems, and/or other removable physical memory device type. In examples, one or more of storage device 3388 are present that are internal and/or external to a housing of computing device 3302 and are or are not removable. Examples of storage device 3388 include a hard disk drive, a SSD, a thumb drive (e.g., a USB (Universal Serial Bus) flash drive), or other physical storage device.

One or more programs are stored in storage 3320. Such programs include operating system 3312, one or more application programs 3314, and other program modules and program data. Examples of such application programs include computer program logic (e.g., computer program code/instructions) for implementing augmentation system 116, query converter 118, vector database generator 122, vector database augmenter 124, sample query generation engine 126, pre-processor 128, model interface 130, post-processor 132, application 134, application 136, generative AI model 138, database engine 140, prompt collector 202, embedding generator 204, diverse query selector 206, database entry generator 208, change determiner 502, sample query generator 504, model interface 506, response validator 508, text embedding generator 510, database updater 512, intent determiner 2402, schema processor 2404, synthetic data filter 2406, 2602, query handler 2604, error handler 2606, actionable component determiner 2902, call scheduler 2904, data consolidator 2906, result generator 2908, query conversion service 2930, and/or each of the components described therein, and/or the steps of flowcharts 300, 400, 600, 700, 800, 1100, 1200, 1300A, 1300B, 1400, 1500, 1600, 1800, 1900, 2000, 2100, 2300, 2500, 2700, and/or 3000, and/or any individual steps thereof.

Storage 3320 also stores data used and/or generated by operating system 3312 and application programs 3314 as application data 3316. Examples of application data 3316 include web pages, text, images, tables, sound files, video data, and other data. In examples, application data 3316 is sent to and/or received from one or more network servers or other devices via one or more wired or wireless networks. Storage 3320 can be used to store further data including a subscriber identifier, such as an International Mobile Subscriber Identity (IMSI), and an equipment identifier, such as an International Mobile Equipment Identifier (IMEI). Such identifiers can be transmitted to a network server to identify users and equipment.

In examples, a user enters commands and information into computing device 3302 through one or more input devices 3330 and receives information from computing device 3302 through one or more output devices 3350. Input device(s) 3330 includes one or more of touch screen 3332, microphone 3334, camera 3336, physical keyboard 3338 and/or trackball 3340 and output device(s) 3350 includes one or more of speaker 3352 and display 3354. Each of input device(s) 3330 and output device(s) 3350 are integral to computing device 3302 (e.g., built into a housing of computing device 3302) or are external to computing device 3302 (e.g., communicatively coupled wired or wirelessly to computing device 3302 via wired interface(s) 3380 and/or wireless modem(s) 3360). Further input devices 3330 (not shown) can include a Natural User Interface (NUI), a pointing device (computer mouse), a joystick, a video game controller, a scanner, a touch pad, a stylus pen, a voice recognition system to receive voice input, a gesture recognition system to receive gesture input, or the like. Other possible output devices (not shown) can include piezoelectric or other haptic output devices. Some devices can serve more than one input/output function. For instance, display 3354 displays information, as well as operating as touch screen 3332 by receiving user commands and/or other information (e.g., by touch, finger gestures, virtual keyboard, etc.) as a user interface. Any number of each type of input device(s) 3330 and output device(s) 3350 are present, including multiple microphones 3334, multiple cameras 3336, multiple speakers 3352, and/or multiple displays 3354.

In embodiments where GPU 3342 is present, GPU 3342 includes hardware (e.g., one or more integrated circuit chips that implement one or more of processing cores, multiprocessors, compute units, etc.) configured to accelerate computer graphics (two-dimensional (2D) and/or three-dimensional (3D)), perform image processing, and/or execute further parallel processing applications (e.g., training of neural networks, etc.). Examples of GPU 3342 perform calculations related to 3D computer graphics, include 2D acceleration and framebuffer capabilities, accelerate memory-intensive work of texture mapping and rendering polygons, accelerate geometric calculations such as the rotation and translation of vertices into different coordinate systems, support programmable shaders that manipulate vertices and textures, perform oversampling and interpolation techniques to reduce aliasing, and/or support very high-precision color spaces.

In examples, NPU 3344 (also referred to as an "artificial intelligence (AI) accelerator" or "deep learning processor (DLP)") is a processor or processing unit configured to accelerate artificial intelligence and machine learning applications, such as execution of machine learning (ML) model (MLM) 3328. In an example, NPU 3344 is configured for a data-driven parallel computing and is highly efficient at processing massive multimedia data such as videos and images and processing data for neural networks. NPU 3344 is configured for efficient handling of Al-related tasks, such as speech recognition, background blurring in video calls, photo or video editing processes like object detection, etc.

In embodiments disclosed herein that implement ML models, NPU 3344 can be utilized to execute such ML models, of which MLM 3328 is an example. For instance, where applicable, MLM 3328 is a generative AI model (e.g., such as generative AI model 138 of FIG. 1) that generates content that is complex, coherent, and/or original. For instance, a generative AI model can create sophisticated sentences, lists, ranges, tables of data, images, essays, and/or the like. An example of a generative AI model is a language model. A language model is a model that estimates the probability of a token or sequence of tokens occurring in a longer sequence of tokens. In this context, a "token" is an atomic unit that the model is training on and making predictions on. Examples of a token include, but are not limited to, a word, a character (e.g., an alphanumeric character, a blank space, a symbol, etc.), a sub-word (e.g., a root word, a prefix, or a suffix). In other types of models (e.g., image based models) a token may represent another kind of atomic unit (e.g., a subset of an image). Examples of language models applicable to embodiments herein include large language models (LLMs), text-to-image AI image generation systems, text-to-video AI generation systems, etc. A large language model (LLM) is a language model that has a high number of model parameters. In examples, an LLM has millions, billions, trillions, or even greater numbers of model parameters. Model parameters of an LLM are the weights and biases the model learns during training. Some implementations of LLMs are transformer-based LLMs (e.g., the family of generative pre-trained transformer (GPT) models). A transformer is a neural network architecture that relies on self-attention mechanisms to transform a sequence of input embeddings into a sequence of output embeddings (e.g., without relying on convolutions or recurrent neural networks).

In further examples, NPU 3344 is used to train MLM 3328. To train MLM 3328, training data is that includes input features (attributes) and their corresponding output labels/target values (e.g., for supervised learning) is collected. A training algorithm is a computational procedure that is used so that MLM 3328 learns from the training data. Parameters/weights are internal settings of MLM 3328 that are adjusted during training by the training algorithm to reduce a difference between predictions by MLM 3328 and actual outcomes (e.g., output labels). In some examples, MLM 3328 is set with initial values for the parameters/weights. A loss function measures a dissimilarity between predictions by MLM 3328 and the target values, and the parameters/weights of MLM 3328 are adjusted to minimize the loss function. The parameters/weights are iteratively adjusted by an optimization technique, such as gradient descent. In this manner, MLM 3328 is generated through training by NPU 3344 to be used to generate inferences based on received input feature sets for particular applications. MLM 3328 is generated as a computer program or other type of algorithm configured to generate an output (e.g., a classification, a prediction/inference) based on received input features, and is stored in the form of a file or other data structure.

In examples, such training of MLM 3328 by NPU 3344 is supervised or unsupervised. According to supervised learning, input objects (e.g., a vector of predictor variables) and a desired output value (e.g., a human-labeled supervisory signal) train MLM 3328. The training data is processed, building a function that maps new data on expected output values. Example algorithms usable by NPU 3344 to perform supervised training of MLM 3328 in particular implementations include support-vector machines, linear regression, logistic regression, Naïve Bayes, linear discriminant analysis, decision trees, K-nearest neighbor algorithm, neural networks, and similarity learning.

In an example of supervised learning where MLM 3328 is an LLM, MLM 3328 can be trained by exposing the LLM to (e.g., large amounts of) text (e.g., predetermined datasets, books, articles, text-based conversations, webpages, transcriptions, forum entries, and/or any other form of text and/or combinations thereof). In examples, training data is provided from a database, from the Internet, from a system, and/or the like. Furthermore, an LLM can be fine-tuned using Reinforcement Learning with Human Feedback (RLHF), where the LLM is provided the same input twice and provides two different outputs and a user ranks which output is preferred. In this context, the user's ranking is utilized to improve the model. Further still, in example embodiments, an LLM is trained to perform in various styles, e.g., as a completion model (a model that is provided a few words or tokens and generates words or tokens to follow the input), as a conversation model (a model that provides an answer or other type of response to a conversation-style prompt), as a combination of a completion and conversation model, or as another type of LLM model.

According to unsupervised learning, MLM 3328 is trained to learn patterns from unlabeled data. For instance, in embodiments where MLM 3328 implements unsupervised learning techniques, MLM 3328 identifies one or more classifications or clusters to which an input belongs. During a training phase of MLM 3328 according to unsupervised learning, MLM 3328 tries to mimic the provided training data and uses the error in its mimicked output to correct itself (i.e., correct weights and biases). In further examples, NPU 3344 perform unsupervised training of MLM 3328 according to one or more alternative techniques, such as Hopfield learning rule, Boltzmann learning rule, Contrastive Divergence, Wake Sleep, Variational Inference, Maximum Likelihood, Maximum A Posteriori, Gibbs Sampling, and backpropagating reconstruction errors or hidden state reparameterizations.

Note that NPU 3344 need not necessarily be present in all ML model embodiments. In embodiments where ML models are present, any one or more of processor 3310, GPU 3342, and/or NPU 3344 can be present to train and/or execute MLM 3328.

One or more wireless modems 3360 can be coupled to antenna(s) (not shown) of computing device 3302 and can support two-way communications between processor 3310 and devices external to computing device 3302 through network 3304, as would be understood to persons skilled in the relevant art(s). Wireless modem 3360 is shown generically and can include a cellular modem 3366 for communicating with one or more cellular networks, such as a GSM network for data and voice communications within a single cellular network, between cellular networks, or between the mobile device and a public switched telephone network (PSTN). In examples, wireless modem 3360 also or alternatively includes other radio-based modem types, such as a Bluetooth modem 3364 (also referred to as a "Bluetooth device") and/or Wi-Fi modem 3362 (also referred to as an "wireless adaptor"). Wi-Fi modem 3362 is configured to communicate with an access point or other remote Wi-Fi-capable device according to one or more of the wireless network protocols based on the IEEE (Institute of Electrical and Electronics Engineers) 802.11 family of standards, commonly used for local area networking of devices and Internet access. Bluetooth modem 3364 is configured to communicate with another Bluetooth-capable device according to the Bluetooth short-range wireless technology standard(s) such as IEEE 802.15.1 and/or managed by the Bluetooth Special Interest Group (SIG).

Computing device 3302 can further include power supply 3382, LI receiver 3384, accelerometer 3386, and/or one or more wired interfaces 3380. Example wired interfaces 3380 include a USB port, IEEE 1394 (FireWire) port, a RS-332 port, an HDMI (High-Definition Multimedia Interface) port (e.g., for connection to an external display), a DisplayPort port (e.g., for connection to an external display), an audio port, and/or an Ethernet port, the purposes and functions of each of which are well known to persons skilled in the relevant art(s). Wired interface(s) 3380 of computing device 3302 provide for wired connections between computing device 3302 and network 3304, or between computing device 3302 and one or more devices/peripherals when such devices/peripherals are external to computing device 3302 (e.g., a pointing device, display 3354, speaker 3352, camera 3336, physical keyboard 3338, etc.). Power supply 3382 is configured to supply power to each of the components of computing device 3302 and receives power from a battery internal to computing device 3302, and/or from a power cord plugged into a power port of computing device 3302 (e.g., a USB port, an A/C power port). LI receiver 3384 is useable for location determination of computing device 3302 and in examples includes a satellite navigation receiver such as a Global Positioning System (GPS) receiver and/or includes other type of location determiner configured to determine location of computing device 3302 based on received information (e.g., using cell tower triangulation, etc.). Accelerometer 3386, when present, is configured to determine an orientation of computing device 3302.

Note that the illustrated components of computing device 3302 are not required or all-inclusive, and fewer or greater numbers of components can be present as would be recognized by one skilled in the art. In examples, computing device 3302 includes one or more of a gyroscope, barometer, proximity sensor, ambient light sensor, digital compass, etc. In an example, processor 3310 and memory 3356 are co-located in a same semiconductor device package, such as being included together in an integrated circuit chip, FPGA, or system-on-chip (SOC), optionally along with further components of computing device 3302.

In embodiments, computing device 3302 is configured to implement any of the above-described features of flowcharts herein. Computer program logic for performing any of the operations, steps, and/or functions described herein is stored in storage 3320 and executed by processor 3310.

In some embodiments, server infrastructure 3370 is present in computing environment 3300 and is communicatively coupled with computing device 3302 via network 3304. Server infrastructure 3370, when present, is a network-accessible server set (e.g., a cloud-based environment or platform). As shown in FIG. 33, server infrastructure 3370 includes clusters 3372. Each of clusters 3372 comprises a group of one or more compute nodes and/or a group of one or more storage nodes. For example, as shown in FIG. 33, cluster 3372 includes nodes 3374. Each of nodes 3374 are accessible via network 3304 (e.g., in a "cloud-based" embodiment) to build, deploy, and manage applications and services. In examples, any of nodes 3374 is a storage node that comprises a plurality of physical storage disks, SSDs, and/or other physical storage devices that are accessible via network 3304 and are configured to store data associated with the applications and services managed by nodes 3374.

Each of nodes 3374, as a compute node, comprises one or more server computers, server systems, and/or computing devices. For instance, a node 3374 in accordance with an embodiment includes one or more of the components of computing device 3302 disclosed herein. Each of nodes 3374 is configured to execute one or more software applications (or "applications") and/or services and/or manage hardware resources (e.g., processors, memory, etc.), which are utilized by users (e.g., customers) of the network-accessible server set. In examples, as shown in FIG. 33, nodes 3374 includes a node 3346 that includes storage 3348 and/or one or more of a processor 3358 (e.g., similar to processor 3310, GPU 3342, and/or NPU 3344 of computing device 3302). Storage 3348 stores application programs 3376 and application data 3378. Processor(s) 3358 operate application programs 3376 which access and/or generate related application data 3378. In an implementation, nodes such as node 3346 of nodes 3374 operate or comprise one or more virtual machines, with each virtual machine emulating a system architecture (e.g., an operating system), in an isolated manner, upon which applications such as application programs 3376 are executed.

In embodiments, one or more of clusters 3372 are located/co-located (e.g., housed in one or more nearby buildings with associated components such as backup power supplies, redundant data communications, environmental controls, etc.) to form a datacenter, or are arranged in other manners. Accordingly, in an embodiment, one or more of clusters 3372 are included in a datacenter in a distributed collection of datacenters. In embodiments, exemplary computing environment 3300 comprises part of a cloud-based platform.

In an embodiment, computing device 3302 accesses application programs 3376 for execution in any manner, such as by a client application and/or a browser at computing device 3302.

In an example, for purposes of network (e.g., cloud) backup and data security, computing device 3302 additionally and/or alternatively synchronizes copies of application programs 3314 and/or application data 3316 to be stored at network-based server infrastructure 3370 as application programs 3376 and/or application data 3378. In examples, operating system 3312 and/or application programs 3314 include a file hosting service client configured to synchronize applications and/or data stored in storage 3320 at network-based server infrastructure 3370.

In some embodiments, on-premises servers 3392 are present in computing environment 3300 and are communicatively coupled with computing device 3302 via network 3304. On-premises servers 3392, when present, are hosted within an organization's infrastructure and, in many cases, physically onsite of a facility of that organization. On-premises servers 3392 are controlled, administered, and maintained by IT (Information Technology) personnel of the organization or an IT partner to the organization. Application data 3398 can be shared by on-premises servers 3392 between computing devices of the organization, including computing device 3302 (when part of an organization) through a local network of the organization, and/or through further networks accessible to the organization (including the Internet). Furthermore, in examples, on-premises servers 3392 serve applications such as application programs 3396 to the computing devices of the organization, including computing device 3302. Accordingly, in examples, on-premises servers 3392 include storage 3394 (which includes one or more physical storage devices such as storage disks and/or SSDs) for storage of application programs 3396 and application data 3398 and include a processor 3390 (e.g., similar to processor 3310, GPU 3342, and/or NPU 3344 of computing device 3302) for execution of application programs 3396. In some embodiments, multiple processors 3390 are present for execution of application programs 3396 and/or for other purposes. In further examples, computing device 3302 is configured to synchronize copies of application programs 3314 and/or application data 3316 for backup storage at on-premises servers 3392 as application programs 3396 and/or application data 3398.

Embodiments described herein may be implemented in one or more of computing device 3302, network-based server infrastructure 3370, and on-premises servers 3392. For example, in some embodiments, computing device 3302 is used to implement systems, clients, or devices, or components/subcomponents thereof, disclosed elsewhere herein. In other embodiments, a combination of computing device 3302, network-based server infrastructure 3370, and/or on-premises servers 3392 is used to implement the systems, clients, or devices, or components/subcomponents thereof, disclosed elsewhere herein.

As used herein, the terms "computer program medium," "computer-readable medium," "computer-readable storage medium," and "computer-readable storage device," etc., are used to refer to physical hardware media. Examples of such physical hardware media include any hard disk, optical disk, SSD, other physical hardware media such as RAMs, ROMs, flash memory, digital video disks, zip disks, MEMs (microelectronic machine) memory, nanotechnology-based storage devices, and further types of physical/tangible hardware storage media of storage 3320. Such computer-readable media and/or storage media are distinguished from and non-overlapping with communication media, propagating signals, and signals per se. Stated differently, "computer program medium," "computer-readable medium," "computer-readable storage medium," and "computer-readable storage device" do not encompass communication media, propagating signals, and signals per se. Communication media embodies computer-readable instructions, data structures, program modules or other data in a modulated data signal such as a carrier wave. The term "modulated data signal" means a signal that has one or more of its characteristics set or changed in such a manner as to encode information in the signal. By way of example, and not limitation, communication media includes wireless media such as acoustic, RF, infrared, and other wireless media, as well as wired media. Embodiments are also directed to such communication media that are separate and non-overlapping with embodiments directed to computer-readable storage media.

As noted above, computer programs and modules (including application programs 3314) are stored in storage 3320. Such computer programs can also be received via wired interface(s) 3360 and/or wireless modem(s) 3360 over network 3304. Such computer programs, when executed or loaded by an application, enable computing device 3302 to implement features of embodiments discussed herein. Accordingly, such computer programs represent controllers of the computing device 3302.

Embodiments are also directed to computer program products comprising computer code or instructions stored on any computer-readable medium or computer-readable storage medium. Such computer program products include the physical storage of storage 3320 as well as further physical storage types.

### XI. Additional Exemplary Embodiments

A first method is described herein, the method comprising: receiving a first request associated with querying a service for data or for an operation to be performed with respect to the data, the first request comprising a first NL question; providing a first prompt comprising the first NL question to a generative AI model to cause the generative AI model to: determine, based at least on the first NL question, additional information is to be determined to translate a language of the first natural language question to a query language, utilize a function call of the service to determine determined information comprising the additional information, and generate a first data query based at least on the determined information; receiving the first data query from the generative AI model; and providing the first data query to the service.

In a further aspect of the foregoing first method, the method further comprises: determining a schema of the service or a database based on the first NL question.

In a further aspect of the foregoing first method, the method further comprises: determining a schema of the service or a database based at least on a configuration setting of the system.

In a further aspect of the foregoing first method, the method further comprises: identifying the function call based at least on the schema and the first NL question.

In a further aspect of the foregoing first method, said identifying the function call comprises: identifying a plurality of function calls based on the schema, the plurality of function calls comprising the function call; and selecting the function call from the plurality of function calls based at least on the first NL question.

In a further aspect of the foregoing first method, said providing the first prompt to the generative AI model further comprises: causing the generative AI model to determine a schema of the database engine based on the first NL question and/or a configuration setting of the system; and causing the generative AI model to identify the function call based at least on the schema and the first NL question.

In a further aspect of the foregoing first method, said causing the generative AI model to identify the function call further comprises: causing the generative AI model to identify a plurality of function calls based on the schema, the plurality of function calls comprising the function call; and select the function call from the plurality of function calls based at least on the first NL question.

In a further aspect of the foregoing first method, said providing the first prompt to the generative AI model to utilize a function call of the database engine comprises: causing the generative AI model to generate an application programming interface (API) call of the service based at least on the additional information to be determined, the API call corresponding to the function call; responsive to receiving the API call from the generative AI model, providing the API call to the service; receiving the determined information from the database engine; and providing the determined information to the generative AI model.

In a further aspect of the foregoing first method, said providing the first prompt to the generative AI model to utilize a function call of the database engine comprises: receiving, from the generative AI model, an indication of the additional information to be determined; determining a function call of the service based on the indication; providing an API call corresponding to the function call to the service, causing the service to determine the determined information; and responsive to receiving the determined information from the service, providing the determined information to the generative AI model.

In a further aspect of the foregoing first method, said providing the first prompt further causes the generative AI model to generate a query plan comprising the first data query.

In a further aspect of the foregoing first method, the query plan comprises a second data query.

In a further aspect of the foregoing first method, the method further comprises causing execution of the query plan by the database engine.

In a further aspect of the foregoing first method, said providing the first prompt to cause the generative AI model to generate the query plan causes the generative AI model to: determine additional data is required to execute the first data query; generate a second data query, wherein a result of the second data query comprises the additional data; and generate the query plan comprising: execution of the second data query, and execution of the first data query having a result of the execution of the second data as an argument thereof.

In a further aspect of the foregoing first method, the method further comprises: receiving a second request associated with querying the service, the second request comprising a second NL question; providing a second prompt comprising the second NL question to the generative AI model to cause the generative AI model to: determine the additional information is to be determined to translate language of the second NL question into the query language, access a prompt history log to determine the determined information, and generate, based at least on the determined information, a third data query; receiving the second data query from the generative AI model; and causing the second data query to be executed by the database engine.

In a further aspect of the foregoing first method, the method further comprises: determining the first data query comprises an error; providing a second prompt to the generative AI model, the second prompt comprising an indication of the error and correction instructions, the second prompt causing the generative AI model to generate a repaired version of the first data query based at least on the error message and the correction instructions; and validating the repaired version, and wherein said providing the first data query to the service comprises providing the repaired version to the service.

In a further aspect of the foregoing method, the first data query corresponds to a translation of the language of the first NL question to the query language.

In a further aspect of the foregoing first method, the method further comprises: subsequent to said causing the first data query to be executed, receiving an error message indicative of failure to execute the first data query; providing a second prompt to the generative AI model, the second prompt comprising the error message and correction instructions, the second prompt causing the generative AI model to generate a repaired data query based at least on the error message and the correction instructions; and responsive to receiving the repaired data query, causing execution of the repaired data query.

In a further aspect of the foregoing first method, the method further comprises: validating the first data query, resulting in a validated version of the first data query, wherein said causing the first data query to be executed comprises causing the validated version to be executed by the database engine.

In a further aspect of the foregoing first method, the first prompt comprises instructions that cause the generative AI model to determine a filter based at least on the first NL question.

In a further aspect of the foregoing first method, said providing the first prompt further causes the generative AI model to: determine the NL question refers to an entity; determine the filter based at least on the entity, the filter causing the first data query to filter based at least on an identifier of the entity; and generate the first data query comprising the filter.

In a further aspect of the foregoing first method, said providing the first prompt to the generative artificial intelligence model to cause the generative artificial intelligence model to generate the first data query comprises: causing the generative artificial intelligence model to generate the first data query as an unstructured string argument of a second function call of the service.

A second method is described herein, the second method comprising: receiving a sample query comprising a feature; generating a first NL question corresponding to the sample query; utilizing an embedding model to generate a text embedding based at least on the first NL question; and associating the text embedding with the sample query and the first NL question in a vector database.

In a further aspect of the foregoing second method, the second method comprises: determining an update to a database engine comprises the feature; and responsive to said determination that the update comprises the feature, causing a sample query generation engine to generate the sample query.

In a further aspect of the foregoing second method, the second method comprises: receiving a request associated with querying a database and comprising a second NL question; determining a query embedding based at least on the second NL question; utilize the vector database to determine a level of similarity between the text embedding and the query embedding satisfies a similarity criterion; and providing a prompt to a generative AI model to cause the generative AI model to convert the second NL question to a data query, the prompt comprising the sample query as an example translation of the first NL query.

In a further aspect of the foregoing second method, said generating the first NL question comprises: providing a prompt to a generative AI model to cause the generative AI model to translate the sample query, resulting in at least the first NL question.

In a further aspect of the foregoing second method, the prompt specifies a schema of the sample query.

In a further aspect of the foregoing second method, said generating the first NL question comprises: generating a plurality of NL questions corresponding to the sample query, the plurality of NL questions comprising the first NL question.

In a further aspect of the foregoing second method, said utilizing the embedding model to generate the text embedding comprises: utilizing the embedding model to generate a respective text embedding for questions of the plurality of NL questions; and said associating the text embedding with the sample query comprises: clustering the respective text embeddings, resulting in a cluster with a centroid representative of an average of values of the respective text embeddings within the cluster, determining a subset of the plurality of NL questions with different distances from the centroid, and associating, in the vector database, the respective text embeddings of the subset of the plurality of NL questions with the sample query.

A third method is described herein, the third method comprising: determining, from a user query, a first actionable component and a second actionable component, the first actionable component corresponding to a first application programming interface (API) call and the second actionable component corresponding to a second API call; causing the first API call and the second API call to execute; responsive to causing the first API call to execute, receiving a first response comprising first data; responsive to causing the second API call to execute, receiving a second response comprising second data; consolidating the first data and the second data, resulting in consolidated data; and providing the consolidated data to a user interface for display thereof.

In a further aspect of the foregoing third method, the user query comprises a NL question, and wherein said determining the first actionable component and the second actionable component comprises: providing a prompt to a generative AI model to cause the generative AI model to generate a data query based at least on the NL question; and receiving, from the generative AI model, a query plan comprising a first data query to execute the first API call and a second data query to execute the second API call.

In a further aspect of the foregoing third method, the third method further comprises: determining, from the user query, a third actionable component corresponding to a client-side operation; and consolidating the first data and the second data based at least on the third actionable component.

A computing device comprising a processor and memory is described herein. The memory storing program code structured to cause the processor to perform any of the foregoing methods.

A system comprising a processor and memory is described herein. The memory storing program code causes the processor to perform any of the foregoing methods.

A computer-readable storage medium encoded with program instructions that, when executed by a processor circuit, perform any of the foregoing methods.

In a further embodiment of any of the foregoing systems, methods, computer devices, and/or computer readable storage medium, the generative AI model is an LLM.

In a further embodiment of any of the foregoing systems, methods, and/or computer readable storage medium, a generative AI model other than an LLM is utilized.

### XII. Conclusion

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

In the discussion, unless otherwise stated, adjectives modifying a condition or relationship characteristic of a feature or features of an implementation of the disclosure, should be understood to mean that the condition or characteristic is defined to within tolerances that are acceptable for operation of the implementation for an application for which it is intended. Furthermore, if the performance of an operation is described herein as being "in response to" one or more factors, it is to be understood that the one or more factors may be regarded as a sole contributing factor for causing the operation to occur or a contributing factor along with one or more additional factors for causing the operation to occur, and that the operation may occur at any time upon or after establishment of the one or more factors. Still further, where "based on" is used to indicate an effect being a result of an indicated cause, it is to be understood that the effect is not required to only result from the indicated cause, but that any number of possible additional causes may also contribute to the effect. Thus, as used herein, the term "based on" should be understood to be equivalent to the term "based at least on."

Numerous example embodiments have been described above. Any section/subsection headings provided herein are not intended to be limiting. Embodiments are described throughout this document, and any type of embodiment may be included under any section/subsection. Furthermore, embodiments disclosed in any section/subsection may be combined with any other embodiments described in the same section/subsection and/or a different section/subsection in any manner.

Furthermore, example embodiments have been described above with respect to one or more running examples. Such running examples describe one or more particular implementations of the example embodiments; however, embodiments described herein are not limited to these particular implementations.

Further still, example embodiments have been described with respect to LLMs; however, it is also contemplated herein that embodiments may utilize other types of generative AI models (e.g., a generative adversarial network (GAN), a multimodal model, and/or the like). For instance, an implementation of the described systems and/or methods may leverage a multimodal model that inputs and/or outputs more than one modality.

Further still, example embodiments of the present disclosure are described using a generative AI model to convert a NL question into a data query. Alternatively, embodiments of the present disclosure utilize a generative AI model to convert a query in a first functional language (e.g., a language of a requesting application) into a data query.

Moreover, according to the described embodiments and techniques, any components of systems, computing devices, servers, applications, embedding models, generative AI models, database engines, databases, query converters, query conversion services, augmentation systems, pre-processors, post-processors, model interfaces, and/or their functions may be caused to be activated for operation/performance thereof based on other operations, functions, actions, and/or the like, including initialization, completion, and/or performance of the operations, functions, actions, and/or the like.

In some example embodiments, one or more of the operations of the flowcharts described herein may not be performed. Moreover, operations in addition to or in lieu of the operations of the flowcharts described herein may be performed. Further, in some example embodiments, one or more of the operations of the flowcharts described herein may be performed out of order, in an alternate sequence, or partially (or completely) concurrently with each other or with other operations.

The embodiments described herein and/or any further systems, sub-systems, devices and/or components disclosed herein may be implemented in hardware (e.g., hardware logic/electrical circuitry), or any combination of hardware with software (computer program code configured to be executed in one or more processors or processing devices) and/or firmware.

While various embodiments have been described above, it should be understood that they have been presented by way of example only, and not limitation. It will be apparent to persons skilled in the relevant art that various changes in form and detail can be made therein without departing from the spirit and scope of the embodiments. Thus, the breadth and scope of the embodiments should not be limited by any of the above-described example embodiments, but should be defined only in accordance with the following claims and their equivalents.

According to one aspect disclosed herein there is provided a system as set out in any of the system claims.

According to another aspect there is provided a method as set out in any of the method claims. In further embodiments, the causing of the generative artificial intelligence model to identify the function call may further comprise: causing the generative artificial intelligence model to identify a plurality of function calls based on the schema, the plurality of function calls comprising the function call; and selecting the function call from the plurality of function calls based at least on the first natural language question. Alternatively or additionally, the method may further comprise: determining the first data query comprises an error; providing a second prompt to the generative artificial intelligence model, the second prompt comprising an indication of the error and correction instructions, the second prompt causing the generative artificial intelligence model to generate a repaired version of the first data query based at least on the error message and the correction instructions; and validating the repaired version, and wherein said providing the first data query to the service comprises providing the repaired version to the service. Alternatively or additionally, in embodiments the first data query may correspond to a translation of the language of the first natural language question to the query language.

According to another aspect disclosed herein, there is provided a computer-readable storage medium having programming instructions encoded thereon configured to perform a method as set out in the computer-readable storage medium claim. In embodiments, the method may further comprise: causing the generative artificial intelligence model to determine second additional information is to be determined to translate the language of the first natural language question, determine a function call of the service suitable to determine the second additional information, and generate an application programming interface (API) call of the service based at least on the function call; responsive to receiving the API call from the generative artificial intelligence model, providing the API call to the service; receiving, from the service, determined information comprising the second additional information; and providing the determined information to the generative artificial intelligence model. Alternatively or additionally, the method may further comprises: determining the first data query comprises an error; providing a second prompt to the generative artificial intelligence model, the second prompt comprising an indication of the error and correction instructions, the second prompt causing the generative artificial intelligence model to generate a repaired version of the first data query based at least on the error message and the correction instructions; and validating the repaired version; wherein said causing the first data query to be provided to the service comprises causing the repaired version to be provided to the service.

## Claims

1. A system (100, 1000, 1700, 2200, 2400, 2600, 2900, 3300) comprising:
a processor (3310, 3342, 3344, 3358, 3390); and
a memory (3320, 3348, 3394) that stores program code (3314, 3376, 3396) structured to cause the processor (3310, 3342, 3344, 3358, 3390) to:
receive a first request (1002, 2910) associated with querying a database (108), the first request (1002, 2910) comprising a first natural language question,
determine a function call (152) of a database engine (108) based at least on the first request (1002, 2910),
generate, based at least on the first request (1002, 2910) and the function call (152), a first prompt (1006, 2912) comprising:
the first natural language question, and
instructions to translate language of the first natural language question into a query language,
provide the first prompt (1006, 2912) to a generative artificial intelligence model (138), causing the generative artificial intelligence model (138) to:
determine, based at least on the first natural language question, additional information (1714) is to be determined to translate the language of the first natural language question into the query language, and
generate a first data query (1708) corresponding to the function call (152) based at least on the additional information (1714),
responsive to providing the first data query (1708) to the database engine (140), receive, from the database engine (140), determined information (1710) comprising the additional information (1714),
provide the determined information (1710) to the generative artificial intelligence model (138), causing the generative artificial intelligence model (138) to:
generate a second data query (1016) based at least on the determined information (1710), and
cause the second data query (1016) to be executed by the database engine (140).

2. The system of claim 1, wherein the program code is further structured to cause the processor to:
receive a second request associated with querying the database, the second request comprising a second natural language question;
provide a second prompt comprising the second natural language question to the generative artificial intelligence model, causing the generative artificial intelligence model to:
determine the additional information is to be determined to translate language of the second natural language question into the query language,
access a prompt history log to determine the determined information, and
generate, based at least on the determined information, a third data query; and
causing the third data query to be executed by the database engine.

3. The system of claim 1, wherein the first prompt further causes the generative artificial intelligence model to generate a query plan comprising the first data query and a variable version of the second data query, the variable version specifying a response of the first data query is to be passed as an argument of the variable version.

4. The system of claim 1, wherein to determine the function call, the program code is further structured to cause the processor to:
determine a schema of the database engine based at least on a configuration setting of the system; and
identify the function call based at least on the schema.

5. The system of claim 1, wherein to determine the function call, the program code is further structured to cause the processor to:
determine a schema of the database engine based on the first natural language question; and
identify the function call based at least on the schema and the first natural language question.

6. The system of claim 5, wherein to identify the function call, the program code is further structured to cause the processor to:
identify a plurality of function calls based on the schema, the plurality of function calls comprising the function call; and
select the function call from the plurality of function calls based at least on the first natural language question.

7. The system of claim 1, wherein the program code is further structured to cause the processor to:
validate the second data query, resulting in a validated version of the second data query,
wherein to cause the second data query to be executed, the program code is further structured to cause the processor to cause the validated version to be executed by the database engine.

8. The system of claim 1, wherein the program code is further structured to cause the processor to:
determine the second data query comprises an error;
provide a second prompt to the generative artificial intelligence model, the second prompt comprising an indication of the error and correction instructions, the second prompt causing the generative artificial intelligence model to generate a repaired version of the second data query based at least on the error message and the correction instructions; and
validate the repaired version, and
wherein to cause the second data query to be executed, the program code is further structured to cause the processor to cause the repaired version to be executed by the database engine.

9. A method (1100) comprising:
receiving a first request associated with querying a service for data or for an operation to be performed with respect to the data, the first request comprising a first natural language question (1102);
providing a first prompt comprising the first natural language question to a generative artificial intelligence model, causing the generative artificial intelligence model to:
determine, based at least on the first natural language question, additional information is to be determined to translate a language of the first natural language question to a query language,
utilize a first function call of the service to determine determined information comprising the additional information, and
generate a first data query based at least on the determined information (1104);
receiving the first data query from the generative artificial intelligence model (1106); and
providing the first data query to the service (1108).

10. The method of claim 9, wherein said providing the first prompt to the generative artificial intelligence model to cause the generative artificial intelligence model to generate the first data query comprises:
causing the generative artificial intelligence model to generate the first data query as an unstructured string argument of a second function call of the service.

11. The method of claim 9, wherein said providing the first prompt to the generative artificial intelligence model to utilize a function call of the service comprises:
causing the generative artificial intelligence model to generate an application programming interface (API) call of the service based at least on the additional information to be determined, the API call corresponding to the function call;
responsive to receiving the API call from the generative artificial intelligence model, providing the API call to the service;
receiving, from the service, the determined information; and
providing the determined information to the generative artificial intelligence model, causing the generative artificial intelligence model to generate the first data query.

12. The method of claim 9, further comprising:
receiving a second request associated with querying the service, the second request comprising a second natural language question;
providing a second prompt comprising the second natural language question to the generative artificial intelligence model, causing the generative artificial intelligence model to:
determine, based at least on the second natural language question, the additional information is to be determined to translate a language of the second natural language question,
access a prompt history log to determine the additional information, and
generate a second data query based at least on the access of the prompt history log;
receiving the second data query from the generative artificial intelligence model; and
causing the second data query to be provided to the service.

13. The method of claim 9, wherein said providing the first prompt further causes the generative artificial intelligence model to generate a query plan comprising the first data query and a variable version of the second data query, the variable version specifying a response of the first data query is to be passed as an argument of the variable version.

14. The method of claim 9, wherein the service comprises a database engine and said providing the first prompt to the generative artificial intelligence model further comprises:
causing the generative artificial intelligence model to determine a schema of the database engine based on the first natural language question; and
causing the generative artificial intelligence model to identify the function call based at least on the schema and the first natural language question.

15. A computer-readable storage medium (3356, 3322, 3324, 3388, 3348, 3394) having programming instructions (3314, 3376, 3396) encoded thereon, the programming instructions (3314, 3376, 3396) structured to cause a processor (3310, 3342, 3344, 3358, 3390) to perform a method (2300) comprising:
receiving a first request associated with querying a service, the first request comprising a first natural language question (2302);
generating, based at least on the first request, a first prompt comprising the first natural language question and instructions to translate language of the first natural language question into query language;
providing the first prompt to a generative artificial intelligence model, causing the generative artificial intelligence model to:
determine, based at least on the first natural language question, first additional information is to be determined to translate the language of the first natural language question,
access a prompt history log comprising a second prompt provided to the generative artificial intelligence model prior to the first prompt,
determine, based at least on the second prompt, the first additional information, and
generate a first data query based at least on the first additional information (2304);
receiving the first data query from the generative artificial intelligence model (2306); and
causing the first data query to be provided to the service (2308).
